# EUROPEAN PATENT APPLICATION

(11) **EP 4 712 529 A1**
(43) Date of publication of application: **18.03.2026**
(21) Application number: 23940136.7
(22) Date of filing: 08.06.2023
(51) Int. Cl.: H04W 12/06

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: GAN, Lu, Dongguan, Guangdong 523860 (CN); LI, Meng, Dongguan, Guangdong 523860 (CN); CAO, Jin, Dongguan, Guangdong 523860 (CN); LI, Sheng, Dongguan, Guangdong 523860 (CN); XIONG, Yiqing, Dongguan, Guangdong 523860 (CN); LI, Hui, Dongguan, Guangdong 523860 (CN); MA, Ruhui, Dongguan, Guangdong 523860 (CN); XIONG, Lihui, Dongguan, Guangdong 523860 (CN); SHI, Cong, Dongguan, Guangdong 523860 (CN)
(74) Representative: Mewburn Ellis LLP
(86) International application number: PCT/CN2023/099240
(87) International publication number: WO 2024/250250

(57) **Abstract**

This disclosure relates to a communication method, a device, a computer-readable storage medium, a computer program product, and a computer program. The method includes the following. A first device receives a first message, where the first message carries a nonce and first authentication information. The first device calculates a first key and second authentication information based on a first shared key and the nonce. When the first authentication information is the same as the second authentication information, the first device calculates ciphertext data based on the first key and data to be sent. The first device sends a second message, where the second message carries the ciphertext data.

## Description

### TECHNICAL FIELD

This disclosure relates to the field of communication, and more specifically to a communication method, a device, a computer-readable storage medium, a computer program product, and a computer program.

### BACKGROUND

During authentication and key agreement for a user equipment (UE) in the related art, a calculation function used is highly complex, and a key architecture is relatively complex. However, a zero-power device has an extremely-limited calculation capability, and if the same authentication and key agreement procedure as in the related art is used, the zero-power device may have poor availability. For example, the zero-power device may still not complete a communication task before energy depletion of the zero-power device. Therefore, how to enable the zero-power device to satisfy requirements for low energy consumption and low delay while realizing authentication and key derivation has become a problem to be solved.

### SUMMARY

A communication method, a device, a computer-readable storage medium, a computer program product, and a computer program are provided in embodiments of the disclosure.

A communication method is provided in embodiments of the disclosure. The method includes the following. A first device receives a first message, where the first message carries a nonce and first authentication information. The first device calculates a first key and second authentication information based on a first shared key and the nonce. When the first authentication information is the same as the second authentication information, the first device calculates ciphertext data based on the first key and data to be sent. The first device sends a second message, where the second message carries the ciphertext data.

A communication method is provided in embodiments of the disclosure. The method includes the following. A second device sends a first message. The first message carries a nonce and first authentication information, the nonce is used by a first device to calculate a first key and second authentication information based on a first shared key, and the first key is used for calculating ciphertext data for data to be sent when the second authentication information is the same as the first authentication information.

A communication method is provided in embodiments of the disclosure. The method includes the following. A third device sends a first message, where the first message carries a nonce and first authentication information, and the nonce is used by a first device to calculate a first key and second authentication information based on a first shared key. The third device receives a second message, where the second message carries ciphertext data, and the ciphertext data is calculated for data to be sent based on the first key when the second authentication information is the same as the first authentication information.

A communication method is provided in embodiments of the disclosure. The method includes the following. A first core-network device sends an eighth message to a third device. The eighth message carries a nonce and a fourth key, the nonce is used for calculating a first key and second authentication information based on a first shared key, and the fourth key is used for decrypting ciphertext data.

A first device is provided in embodiments of the disclosure. The first device includes a first communication unit and a first processing unit. The first communication unit is configured to receive a first message, where the first message carries a nonce and first authentication information; and send a second message, where the second message carries ciphertext data. The first processing unit is configured to calculate a first key and second authentication information based on a first shared key and the nonce; and calculate the ciphertext data based on the first key and data to be sent, when the first authentication information is the same as the second authentication information.

A second device is provided in embodiments of the disclosure. The second device includes a second communication unit. The second communication unit is configured to send a first message. The first message carries a nonce and first authentication information, the nonce is used by a first device to calculate a first key and second authentication information based on a first shared key, and the first key is used for calculating ciphertext data for data to be sent when the second authentication information is the same as the first authentication information.

A third device is provided in embodiments of the disclosure. The third device includes a third communication unit. The third communication unit is configured to send a first message, where the first message carries a nonce and first authentication information, and the nonce is used by a first device to calculate a first key and second authentication information based on a first shared key. The third communication unit is further configured to receive a second message, where the second message carries ciphertext data, and the ciphertext data is calculated for data to be sent based on the first key when the second authentication information is the same as the first authentication information.

A first core-network device is provided in embodiments of the disclosure. The first core-network device includes a fourth communication unit. The fourth communication unit is configured to send an eighth message to a third device. The eighth message carries a nonce and a fourth key, the nonce is used for calculating a first key and second authentication information based on a first shared key, and the fourth key is used for decrypting ciphertext data.

A first device is provided in embodiments of the disclosure. The first device includes a processor and a memory in communication with the processor. The memory is configured to store instructions which, when executed by the processor, cause the first device to perform the above method.

A second device is provided in embodiments of the disclosure. The second device includes a processor and a memory in communication with the processor. The memory is configured to store instructions which, when executed by the processor, cause the second device to perform the above method.

A third device is provided in embodiments of the disclosure. The third device includes a processor and a memory in communication with the processor. The memory is configured to store instructions which, when executed by the processor, cause the third device to perform the above method.

A first core-network device is provided in embodiments of the disclosure. The first core-network device includes a processor and a memory in communication with the processor. The memory is configured to store instructions which, when executed by the processor, cause the first core-network device to perform the above method.

A chip is provided in embodiments of the disclosure. The chip is configured to implement the above method. Specifically, the chip includes a processor. The processor is configured to invoke and execute a computer program stored in a memory, to cause a device equipped with the chip to perform the above method.

A computer-readable storage medium is provided in embodiments of the disclosure. The computer-readable storage medium is configured to store a computer program which, when executed by a device, causes the device to perform the above method.

A computer program product is provided in embodiments of the disclosure. The computer program product includes computer program instructions which cause a computer to perform the above method.

A computer program is provided in embodiments of the disclosure. The computer program, when executed by a computer, causes the computer to perform the above method.

By using the solution provided in the embodiments, a first device needs to receive only a nonce to derive a first key for encryption and second authentication information for authentication based on a local first shared key, so that when the second authentication information is the same as first authentication information, authentication can be completed and data encryption can be directly performed based on the first key. As such, authentication can be realized and a key can be obtained through only one signalling (message) exchange, thereby reducing transmission overhead and storage overhead; and a key for encryption can be obtained through only one key derivation, thereby simplifying a key derivation architecture and reducing calculation time for key derivation. Further, according to the solution provided in the embodiments of the disclosure, the transmission overhead, storage overhead, and calculation time for key derivation can be reduced, the processing efficiency of authentication and key derivation can also be improved while the authentication and key derivation are ensured, and thus requirements for low energy consumption and low delay can be satisfied, which is particularly suitable for zero-power devices.

### BRIEF DESCRIPTION OF THE DRAWINGS

FIG. 1 is a schematic diagram of an application scenario according to embodiments of the disclosure.
FIGs. 2 to 5 are multiple schematic flowcharts of a communication method according to an embodiment of the disclosure.
FIG. 6 is an exemplary flowchart of an encryption/decryption process of ASCON-authenticated encryption with associated data (AEAD) according to an embodiment of the disclosure.
FIG. 7 is a schematic flowchart of a communication method according to an embodiment of the disclosure.
FIG. 8 is a schematic diagram of a key architecture according to an embodiment of the disclosure.
FIGs. 9 to 10 are multiple schematic flowcharts of a communication method according to an embodiment of the disclosure.
FIG. 11 is another schematic diagram of a key architecture according to an embodiment of the disclosure.
FIG. 12 is another schematic flowchart of a communication method according to an embodiment of the disclosure.
FIG. 13 is a schematic diagram of multiple key derivation architectures in the related art.
FIG. 14 is a schematic block diagram of a first device according to an embodiment of the disclosure.
FIG. 15 is a schematic block diagram of a second device according to an embodiment of the disclosure.
FIG. 16 is a schematic block diagram of a third device according to an embodiment of the disclosure.
FIG. 17 is a schematic block diagram of a first core-network device according to an embodiment of the disclosure.
FIG. 18 is a schematic block diagram of a communication device according to embodiments of the disclosure.
FIG. 19 is a schematic block diagram of a chip according to embodiments of the disclosure.
FIG. 20 is a schematic block diagram of a communication system according to embodiments of the disclosure.

### DETAILED DESCRIPTION

The technical solutions of embodiments of the disclosure are applicable to various communication systems, for example, a global system for mobile communication (GSM), code division multiple access (CDMA), wideband code division multiple access (WCDMA), a general packet radio service (GPRS), long-term evolution (LTE), an advanced LTE (LTE-A), a new radio (NR), an evolved NR, a wireless local area network (WLAN), a wireless fidelity (WiFi), or other communication systems.

Various embodiments of the disclosure are described in connection with a network device and a terminal. The terminal may be mobile or fixed, and may also be referred to as a mobile station, a subscriber unit, etc. The terminal may be a station in a WLAN, an intelligent terminal, a wireless modem, a pad, a laptop computer, etc. In embodiments of the disclosure, the terminal may be a virtual reality (VR) terminal/an augmented reality (AR) terminal, a terminal in industrial control, a terminal in self-driving, a terminal in remote medicine, a terminal in smart grid, a terminal in transportation safety, a terminal in smart city, a wireless terminal in smart home, etc. By way of explanation rather than limitation, in embodiments of the disclosure, the terminal may also be a wearable device.

In embodiments of the disclosure, the network device may be a device configured to communicate with the terminal, and the network device may be an access point (AP) in a WLAN, a base station in GSM, CDMA, or WCDMA, or may be an evolutional Node B (eNB or eNodeB) in LTE, or a relay station, or an in-vehicle device, a wearable device, a network device (gNB) in an NR network, a network device in a future evolved public land mobile network (PLMN), a network device in a non-terrestrial network, etc. By way of explanation rather than limitation, in embodiments of the disclosure, the network device may be mobile. For example, the network device may be a mobile device.

It may be understood that, the terms "system" and "network" herein are usually used interchangeably throughout this disclosure. The term "and/or" herein only describes an association between associated objects, and indicates that there may be three relationships, for example, A and/or B may mean A alone, both A and B exist, and B alone. In addition, the character "/" herein can indicate that the associated objects are in an "or" relationship. It can be understood that, "indication" referred to in embodiments of the disclosure may be a direct indication, may be an indirect indication, or may mean that there is an association. For example, A indicates B may mean that A directly indicates B, for instance, B may be obtained according to A, may mean that A indirectly indicates B, for instance, A indicates C, and B may be obtained according to C, or may mean that there is an association between A and B. In the elaboration of embodiments of the disclosure, the term "correspondence" may mean that there is a direct or indirect correspondence between the two, may mean that there is an association between the two, may mean a relationship of indicating and being indicated or configuring and being configured, etc.

To facilitate understanding of the technical solutions of embodiments of the disclosure, the related art of embodiments of the disclosure will be described below. The following related art, as an optional solution, may be arbitrarily combined with the technical solutions of embodiments of the disclosure, which shall all belong to the protection scope of embodiments of the disclosure.

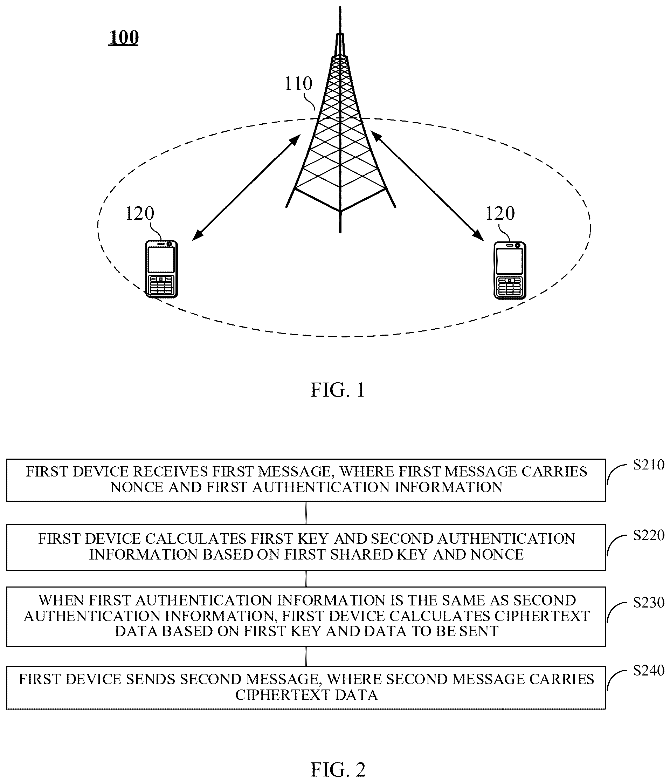

FIG. 1 exemplarily illustrates a communication system 100. The communication system 100 includes one network device 110 and two terminals 120. In a possible embodiment, the communication system 100 may include multiple network devices 110, and there may be other quantities of terminals 120 in the coverage of each network device 110, which is not limited in embodiments of the disclosure. In a possible embodiment, the communication system 100 may also include other network entities such as a mobility management entity (MME), an access and mobility management function (AMF), etc., which is not limited in embodiments of the disclosure. The network device may also include an access-network device and a core-network device. That is, the communication system may further include multiple core networks for communication with the access-network device. The access-network device may be a base station in LTE, LTE-A, or an NR system. Taking the communication system illustrated in FIG. 1 as an example, a communication device may include the network device and the terminal(s) that have communication functions. The communication device may further include other devices such as a network controller, an MME, or other network entities in the communication system, which is not limited in embodiments of the disclosure.

To facilitate understanding of embodiments of the disclosure, basic processes and basic concepts involved in embodiments of the disclosure will be briefly described below. It may be understood that, the basic processes and basic concepts introduced below do not limit embodiments of the disclosure.

An ambient internet of things (AIoT) device is an internet of things (IoT) device driven by energy harvesting, which requires no battery or only has limited energy-storage capacity (for example, using a capacitor). By using backscattering and low-power computing technologies, a terminal thereof has an extremely simple radio frequency and baseband circuit structure, greatly reducing the cost, size, and circuit energy consumption of the terminal. Compared with existing cellular IoT (CIoT) technologies (such as narrow band IoT (NB-IoT), LTE for machines (LTE-M), reduced capability (RedCap), etc.), IoT services supported by the AIoT can realize battery-free terminals to satisfy communication requirements of the IoT with ultra-low power consumption, extremely small size, and extremely low cost. These devices can satisfy the following conditions: operating under conditions of extreme environments such as high pressure, extremely high/low temperature, or humid environments; having ultra-low complexity and very small device size/form factor (for example, millimeter thickness); being maintenance-free (for example, the devices having no need for replacement of conventional batteries) and having a longer life cycle (for example, 20 years), etc.; being battery-free or only having limited energy-storage capacity; and requiring no dedicated radio frequency identification (RFID) tag reader.

FIG. 2 is a schematic flowchart of a communication method according to an embodiment of the disclosure. The method includes at least part of the following contents.

At S210, a first device receives a first message, where the first message carries a nonce and first authentication information.

At S220, the first device calculates a first key and second authentication information based on a first shared key and the nonce.

At S230, when the first authentication information is the same as the second authentication information, the first device calculates ciphertext data based on the first key and data to be sent.

At S240, the first device sends a second message, where the second message carries the ciphertext data.

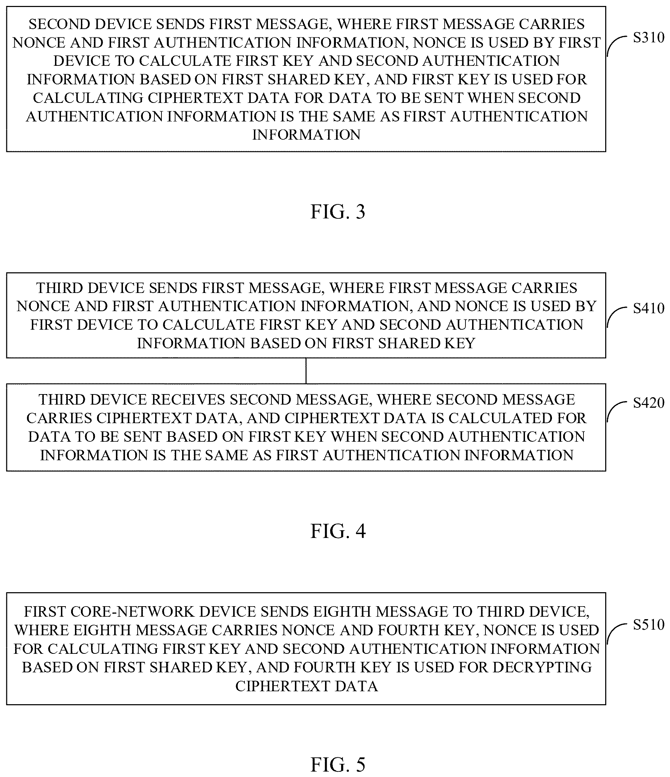

FIG. 3 is a schematic flowchart of a communication method according to another embodiment of the disclosure. The method includes at least part of the following contents.

At S310, a second device sends a first message. The first message carries a nonce and first authentication information, the nonce is used by a first device to calculate a first key and second authentication information based on a first shared key, and the first key is used for calculating ciphertext data for data to be sent when the second authentication information is the same as the first authentication information.

FIG. 4 is a schematic flowchart of a communication method according to another embodiment of the disclosure. The method includes at least part of the following contents.

At S410, a third device sends a first message, where the first message carries a nonce and first authentication information, and the nonce is used by a first device to calculate a first key and second authentication information based on a first shared key.

At S420, the third device receives a second message, where the second message carries ciphertext data, and the ciphertext data is calculated for data to be sent based on the first key when the second authentication information is the same as the first authentication information.

FIG. 5 is a schematic flowchart of a communication method according to another embodiment of the disclosure. The method includes at least part of the following contents.

At S510, a first core-network device sends an eighth message to a third device. The eighth message carries a nonce and a fourth key, the nonce is used for calculating a first key and second authentication information based on a first shared key, and the fourth key is used for decrypting ciphertext data.

In embodiments of the disclosure, the first device is a zero-power device. Exemplarily, the zero-power device may be an AIoT device, an active zero-power device, a passive zero-power device, a semi-passive zero-power device, or the like. Exemplarily, the first device may be a terminal with a relatively low arithmetic capability. All possible names or possible devices of the first device will not be exhaustively listed herein.

The second device includes one of: a terminal device, an access-network device, and a gateway.

The third device includes one of: an application function (AF), an AMF, an authentication server function (AUSF), a hardware security engine (HSE), a unified data repository (UDR), a security anchor function (SEAF), and a core-network dedicated network element. Exemplarily, the third device may include an AF or a second core-network device. The AF may correspond to the first device or serve the first device. The second core-network device may include at least one of: an AMF, an AUSF, an HSE, a UDR, an SEAF, or a core-network dedicated network element. The core-network dedicated network element may refer to a network element having an AIoT function or a zero-power service function. It may be understood that, the core-network dedicated network element may be a separate network element dedicated to serving the AIoT function or zero-power function, or may be an existing core-network element to which the AIoT function (or a function related to a zero-power service) is added. All possible cases will not be exhaustively listed in this embodiment.

The first core-network device is different from the above third device, and the first core-network device may include at least one of: a unified data management (UDM) function, an authentication credential repository and processing function (ARPF), or the like. It may be understood that, this is merely taken as an example for illustration, and in actual processing, the first core-network device may further include another device of a core network, which will not be exhaustively listed herein.

In some embodiments, the first device needs to access a 5th-generation (5G) architecture, or the first device needs to access a 5G network (referred to as "5G" for short).

Exemplarily, the first device may be connected to a core network (i.e., a 5G core network) by using an indirect mode. In this mode, the first device is connected to the core network via a terminal device and an access-network device corresponding to the terminal device. In this case, the second device is the terminal device, or the second device may be the access-network device corresponding to the terminal device. Exemplarily, the first device may be connected to a core network by using a direct mode. In this mode, the first device is connected to the core network via a corresponding access-network device. In this case, the second device is the access-network device. When the second device is a terminal device, the second device may be a proxy user equipment (UE), a relay UE, or the like.

In some embodiments, the first device is to access a WLAN. In this case, the second device may be a gateway in the WLAN.

In some embodiments, the first shared key may be any one of: a first pre-shared key (PSK), a first pre-distributed key, a first private-network key, an application-layer key, a root key, and the like. In a preferred example, the first shared key may be a root key.

In some embodiments, in the case where the first device is to access the 5G network, the above first shared key may be shared by the first device and the first core-network device. In some embodiments, in the case where the first device is to access the WLAN, the above first shared key may be shared by the first device and the second device.

In some possible embodiments, the first device may calculate the first key and the second authentication information based on the first shared key and the nonce as follows. The first device calculates the first key based on the first shared key, the nonce, and a first parameter. The first device calculates the second authentication information based on the first key.

Herein, the first device calculating the first key based on the first shared key, the nonce, and the first parameter may mean that the first device calculates the first key based on the first shared key, the nonce, and the first parameter by using a first calculation manner.

Herein, the first key may be a security key, and the security key may also be referred to as a communication security key, an authentication and data security key, or the like.

In some embodiments, in the case where the first device accesses the 5G architecture, the first key may be a security key between the first device and the third device, which is used for realizing identity authentication and data protection between the first device and the third device. In this example, assuming that the third device is an AF, the first key may be represented by *K_{AF}.*

In some embodiments, in the case where the first device accesses the WLAN, the first key may be a security key between the first device and the second device, which is used for realizing mutual authentication and data protection between the first device and the second device. In this example, assuming that the second device is a gateway, and the gateway is represented by *gate,* the first key may be represented by *K_{gate}.*

The first calculation manner may include at least one of: a key derivation function (KDF), a first authentication function, a second authentication function, a third key generation function (for example, represented by *f3*), a fourth key generation function (for example, represented by *f4*)*,* a fifth key generation function (for example, represented by *f5*)*,* a hash algorithm, an advanced encryption standard (AES), snow third generation (SNOW 3G), ZUChongzhi (ZUC), exclusive OR (XOR) calculation, or direct calculation. Herein, the first authentication function may be represented by *f1()*, and the second authentication function may be represented by *f2()*. The hash algorithm may be represented by *HASH().* The hash algorithm may include hash based message authentication code-secure hash algorithm-256 (HMAC-SHA-256). Alternatively, other hash algorithms can be used, which will not be exhaustively listed in this embodiment.

The first parameter includes at least one of: an identifier of the first device, a length of the identifier of the first device, a first sequence number (SQN), a length of the first sequence number, a length of the nonce, or a second specified value.

The identifier of the first device may be an identity (ID) of the first device and/or a network identifier of the first device. The ID may include, but is not limited to, at least one of: a number, a serial number, a name, a subscription permanent identifier (SUPI), a subscription concealed identifier (SUCI), a permanent equipment identifier (PEI), a 5G globally unique temporary identifier (5G-GUTI), an internal-group identifier (IGI), a generic public subscription identifier (GPSI), or the like. The above network identifier may include at least one of an internet protocol (IP) address or the like. Exemplarily, the identifier of the first device may be represented by the ID of the first device, and all possible contents and representation manners of the identifier of the first device will not be exhaustively listed herein.

The first sequence number can be calculated based on a second shared key. The first sequence number can be used to protect against replay or resist replay attacks. In terms of the processing by the first device, the method may further include the following. The first device calculates the first sequence number based on the second shared key, where the second shared key is shared by the first device and the second device.

In some examples, in the case where the first device accesses the 5G, assuming that the first device is an AIoT device and the second device is an access-network device, the second shared key may be shared by the AIoT device and the access-network device; and assuming that the first device is an AIoT device and the second device is a terminal device, the second shared key may be shared by the AIoT device and the terminal device. In some examples, in the case where the first device accesses the WLAN, assuming that the first device is an AIoT device and the second device is a gateway in the WLAN, the second shared key may be shared by the AIoT device and the gateway.

In some embodiments, the second shared key may be a physical layer key. The physical layer key may be a shared key generated from over-the-air channel source characteristics between the first device and the second device, and has Shannon information-theoretic security. The physical layer key does not require cryptography calculation, and thus is characterized by low power consumption. It may be understood that, the second shared key may also be another type of key, for example, may also be any one of a second pre-shared key, a second pre-distributed key, a second private-network key, and the like. All possible types of the second shared key will not be exhaustively listed herein.

For example, when the second shared key is a physical layer key, the first device calculating the first sequence number based on the second shared key may mean that the first device extracts a secret as the first sequence number by using a physical layer key algorithm.

The second specified value may be set according to an actual situation. The second specified value may be a fixed value (or a second fixed value) assigned by a third party. Exemplarily, the second specified value may be represented by *FC,* and a value of the second specified value may be *FC=0x7E.* This is merely taken as an example for illustration, and in actual processing, a specific value of the second specified value may also be another value, which will not be exhaustively listed herein.

The above length may be represented by a binary value, a decimal value, a hexadecimal value, or a value in another numeral system, which is not limited in this embodiment. The above length may refer to a length of binary data of a content corresponding thereto, a length of decimal data of the content corresponding thereto, a length of hexadecimal data of the content corresponding thereto, or a length of other numeral system data of the content corresponding thereto. For example, if the first sequence number is binary data, the length of the first sequence number may refer to a length of the binary data of the first sequence number.

In an embodiment, the first parameter may include the identifier of the first device and the first sequence number. In other words, the first device may calculate the first key based on the first shared key, the nonce, the identifier of the first device, and the first sequence number by using the first calculation manner. For example, when the first device is an AIoT device, the identifier of the first device may be an AIoT ID, and the first sequence number may be represented by *SQN,* the AIoT device may generate the first key (for example, *K_{AF}* or *K_{gate}*) by using a KDF, where input parameters thereof include the first shared key *K*, the AIoT ID, the first sequence number *SQN,* and the nonce R.

In an embodiment, the first parameter may include the identifier of the first device, the first sequence number, and the second specified value. The first device may calculate the first key based on the first shared key, the nonce, the identifier of the first device, the first sequence number, and the second specified value by using the first calculation manner. For example, when the first device is an AIoT device, the identifier of the first device may be an AIoT ID, the first sequence number may be represented by *SQN,* the second specified value may be represented by *FC,* and a value of the second specified value may be *FC=0x7E,* the AIoT device may generate the first key (for example, *K_{AF}* or *K_{gate}*) by using a KDF, where input parameters thereof include the first shared key *K,* the AIoT ID, *SQN,* the nonce R, and *0x7E.*

In an embodiment, the first parameter may include the identifier of the first device, the length of the identifier of the first device, the first sequence number, the length of the first sequence number, the length of the nonce, and the second specified value. The first device may calculate the first key based on the first shared key, the nonce, the identifier of the first device, the length of the identifier of the first device, the first sequence number, the length of the first sequence number, the length of the nonce, and the second specified value by using the first calculation manner. For example, when the first device is an AIoT device, the identifier of the first device may be an AIoT ID, the first sequence number may be represented by *SQN,* the second specified value may be represented by *FC,* and a value of the second specified value may be *FC=0x7E,* the AIoT device may generate the first key (for example, *K_{AF}* or *K_{gate}*) by using a KDF, where input parameters thereof include parameters such as the first shared key *K*, the AIoT ID, a length of the AIoT ID, *SQN,* a length of *SQN,* the nonce *R*, the length of the nonce *R*, and *FC=0x7E.*

The above first parameter is also merely taken as an example for illustration, and in actual processing, the first parameter may also include, but is not limited to, various possible contents listed in the above embodiments. For example, the first parameter may further include an anonymity key (AK). The anonymity key can be calculated from the nonce and a seventh key by using a specified function. The specified function may be any one of functions *f1-f5.* The seventh key may be the first shared key, the second shared key, or another shared key in the above embodiments, the another shared key may be a shared key for the first device and the third device, and all possible keys thereof will not be exhaustively listed herein.

It may be understood that, as long as any one of the above first parameters is used to calculate the first key, it falls within the protection scope of this embodiment, and all contents or parameters that may be included in the first parameter will not be exhaustively listed in this embodiment.

In some possible embodiments, the first device calculates the second authentication information based on the first key.

The above first authentication information may be a first message authentication code (MAC), and accordingly, the second authentication information may be a second MAC. To distinguish the first MAC from the second MAC, the first MAC may be represented by *MAC,* and the second MAC may be represented by *MAC';* or, the first MAC may be represented by *MAC1,* and the second MAC may be represented by *MAC2* or *MAC1'.* All possible representation manners of the first MAC and the second MAC will not be exhaustively listed herein. It may be understood that, the first authentication information and the second authentication information may also be other types of authentication codes or verification codes in addition to MACs. As long as the second authentication information has the same type, the same calculation parameter, and the same calculation manner as the first authentication information, it falls within the protection scope of this embodiment.

In some embodiments, the first device calculates the second authentication information based on the first key by using a second calculation manner. The second calculation manner may include at least one of: a KDF, a first authentication function (for example, represented by *f1*)*,* a second authentication function (for example, represented by *f*2), a third key generation function (for example, represented by *f3*), a fourth key generation function (for example, represented by *f4*)*,* a fifth key generation function (for example, represented by *f5*)*,* or the like.

For example, the first device calculating the second authentication information based on the first key by using the second calculation manner may mean that the first device uses the first key as input information and calculates the second authentication information by using any one of the second calculation manners.

In some embodiments, the first device calculates the second authentication information based on the first key as follows. The first device calculates the second authentication information based on the first key and a second parameter. The second parameter includes at least one of: the nonce, a length of the nonce, or a first specified value.

The first device calculating the second authentication information based on the first key and the second parameter may mean that the first device calculates the second authentication information based on the first key and the second parameter by using the second calculation manner.

The related illustration of the nonce, the length, and the second calculation manner is the same as that in the above embodiments, which will not be repeated.

The first specified value may be set according to an actual situation. The first specified value and the second specified value may be the same or different, both of which fall within the protection scope of this embodiment. The first specified value may be a fixed value (or a first fixed value) assigned by the third party. Exemplarily, the first specified value may be the same as the second specified value, for example, the first specified value may be represented by *FC,* and a value of the first specified value may be *FC=0x7E.* This is merely taken as an example for illustration, and in actual processing, a specific value of the first specified value may also be another value, which will not be exhaustively listed herein.

Exemplarily, when the second calculation manner varies, specific contents of the second parameter may be different. For example, the second calculation manner may be a KDF, and in this case, the second parameter may include the nonce, the length of the nonce, and the first specified value; and accordingly, the first device calculates the second authentication information based on the first key, the nonce, the length of the nonce, and the first specified value by using the KDF, that is, the first device uses the KDF, and input parameters include the first key, the nonce *R*, the length of *R*, and the first specified value *0x7E.* For another example, the second calculation manner may be a function *f2*, and in this case, the second parameter may include the nonce; and accordingly, the first device calculates the second authentication information based on the first key and the nonce by using the KDF, that is, the first device uses the function *f2*, and input parameters include the first key and the nonce *R*. It may be understood that, this is also merely taken as an example for illustration, in actual processing, the second calculation manner is not limited to the two functions in the above examples, and the second parameter may also not be limited to the above contents, which will not be exhaustively listed in this embodiment.

In some possible embodiments, the first device may calculate the first key and the second authentication information based on the first shared key and the nonce as follows. The first device calculates the first key based on the first shared key, the nonce, and a first parameter, and calculates the second authentication information based on the first shared key, the nonce, and a first sequence number.

The detailed illustration of calculating the first key by the first device based on the first shared key, the nonce, and the first parameter is the same as that in the above embodiments, which will not be repeated.

The difference between this embodiment and the above embodiment lies in that the calculation of the first key does not affect the calculation of the second authentication information, or the calculation of the first key is decoupled from the calculation of the second authentication information. An order of the calculation of the first key and the calculation of the second authentication information is not limited in this embodiment.

The second authentication information is calculated based on the first shared key, the nonce, and a sequence number. The second authentication information may be calculated based on the first shared key, the nonce, and the first sequence number as follows. The second authentication information is calculated based on the first shared key, the nonce, and the first sequence number by using a third calculation manner.

The detailed illustration of the first sequence number is the same as that in the above embodiments, which will not be repeated.

The third calculation manner may be a security algorithm specified in the related protocol, which may include, for example, at least one of: a first authentication function (for example, represented by *f1*)*,* a second authentication function (for example, represented by *f2*), a third key generation function (for example, represented by *f3*), a fourth key generation function (for example, represented by *f4*)*,* a fifth key generation function (for example, represented by *f5*)*,* or the like.

Exemplarily, calculating the second authentication information based on the first shared key, the nonce, and the first sequence number by using the third calculation manner may refer to deriving *MAC'* by using a security algorithm *f1*/*f2*/*f3*/*f4*/*f5*, with inputs including the first shared key *K,* the first sequence number *SQN,* and the nonce *R*, and other parameters.

It may be noted that, a parameter(s) used for calculating the second authentication information in this embodiment may include, but is not limited to, the first shared key, the nonce, and the first sequence number described above, and may also include more parameters, which will not be exhaustively listed in this embodiment.

In some possible embodiments, after calculating the second authentication information, the first device may determine whether the second authentication information is the same as the first authentication information. If the second authentication information is the same as the first authentication information, it can be determined that the authentication succeeds, and otherwise, it can be determined that the authentication fails.

Herein, authentication success or authentication failure may refer to authentication success or authentication failure for a generating device (or an identity of the device, or validity of the device) of the first authentication information. In some embodiments, the first device is applied to the 5G architecture, the first authentication information can be generated by the first core-network device, and if the second authentication information is the same as the first authentication information, the first device may determine that the authentication for the first core-network device succeeds, or the authentication for a core network succeeds, or the authentication for validity of the core network succeeds. In some embodiments, the first device is applied to the WLAN architecture, the first authentication information can be generated by the second device, and if the second authentication information is the same as the first authentication information, the first device may determine that the authentication for the second device succeeds, or the authentication for validity of the second device succeeds, or the authentication for an identity of the second device succeeds.

Furthermore, if the first device determines that the authentication fails, the first device may reject a response to the first message and end the process.

In some possible embodiments, when the first authentication information is the same as the second authentication information, the first device calculates ciphertext data based on the first key and data to be sent.

In some embodiments, the second message further carries third authentication information, the third authentication information is used for authenticating the first device, and the first device calculates the ciphertext data based on the first key and the data to be sent as follows. The first device calculates the ciphertext data and the third authentication information based on the first key and the data to be sent.

Herein, the data to be sent may be service data. The data to be sent may be service data to be reported by the first device this time or service data to be sent by the first device. A manner of obtaining the data to be sent may include data collected by the first device, or may include data obtained in other manners. The manner and time of obtaining the data to be sent are not limited in this embodiment.

The first device calculating the ciphertext data and the third authentication information based on the first key and the data to be sent may mean that the first device calculates the ciphertext data and the third authentication information based on the first key and the data to be sent by using a fourth calculation manner.

The fourth calculation manner may be a specified encryption calculation manner. For example, the fourth calculation manner may be an ASCON algorithm or an ASCON-authenticated encryption with associated data (AEAD) algorithm. Taking the ASCON-AEAD algorithm as an example for illustration, the ASCON-AEAD algorithm includes two parts: encryption and decryption, and the two parts have the same processes and structures and merely differ in reversed inputs and outputs in terms of plaintext and ciphertext. The fourth calculation manner in this embodiment may specifically be an encryption part in the ASCON-AEAD algorithm. That is, the first device calculating the ciphertext data and the third authentication information based on the first key and the data to be sent by using the fourth calculation manner may mean that the first device calculates the ciphertext data and the third authentication information based on the first key and the data to be sent by using the encryption part in the ASCON-AEAD algorithm. Exemplarily, the ciphertext data may be represented by *C*, and the third authentication information may be represented by *T.* In this example, *T* represents an authentication tag.

The first device may calculate the ciphertext data and the third authentication information based on the first key and the data to be sent by using the encryption part in the ASCON-AEAD algorithm as follows. The first device calculates the ciphertext data and the third authentication information based on the first key, the data to be sent, and a tenth parameter by using the encryption part in the ASCON-AEAD algorithm. The tenth parameter includes at least one of: an identifier of the first device, a service type indicator, an identifier of a network-side device, a first sequence number, the nonce, or an anonymity key.

Herein, the service type indicator may refer to an indicator indicating that a service type is a zero-power service. The zero-power service may include an AIoT service. All possible values of the service type indicator and meanings indicated by the values will not be exhaustively listed in this embodiment, and as long as a value of the service type indicator may indicate the zero-power service (for example, the AIoT service), it falls within the protection scope of this embodiment.

The network-side device may be the second device and/or the third device described above, and accordingly, the identifier of the network-side device may be an identifier of the second device and/or an identifier of the third device.

The data to be sent may be service data or full text of a message. The full text of the message may include service data and/or other possible data in addition to the service data, and all contents that may be included in the full text of the message is not limited herein.

In an example, the first device calculating the ciphertext data and the third authentication information based on the first key, the data to be sent, and the tenth parameter by using the encryption part in the ASCON-AEAD algorithm may mean that the first device calculates the ciphertext data and the third authentication information based on the first key, the data to be sent, and associated data by using the encryption part in the ASCON-AEAD algorithm. The associated data includes at least one of the identifier of the first device, the service type indicator, or the identifier of the network-side device.

In an example, the first device calculating the ciphertext data and the third authentication information based on the first key, the data to be sent, and the tenth parameter by using the encryption part in the ASCON-AEAD algorithm may mean that: the first device calculates a calculation key based on the first key and at least one of the first sequence number, the nonce, or the anonymity key, and then calculates the ciphertext data and the third authentication information based on the calculation key, the data to be sent, and associated data by using the encryption part in the ASCON-AEAD algorithm. The associated data includes at least one of the identifier of the first device, the service type indicator, or the identifier of the network-side device.

It may be understood that, this is merely taken as an example for illustration, and the above tenth parameter may include other more parameters in addition to various possible contents or parameters in the above examples. For example, the tenth parameter may also include a second shared key (for example, a physical layer key) and the like, which will not be exhaustively listed in this embodiment.

To provide high security and performance in environments with limited computational resources, the above ASCON-AEAD algorithm has received more attention for lightweight AEAD. The main technology used in an AEAD algorithm is an algorithm with Galois/Counter mode (GCM), and such algorithm can operate efficiently in most cases. However, there are some resource-limited scenarios, and the use of the above algorithm is limited in these scenarios. ASCON is finally selected by the national institute of standards and technology (NIST) as a lightweight cryptography standard because of its high security and low implementation cost. ASCON is a family of ciphers and contains a total of seven cryptography algorithms, among which two most important algorithms AEAD and hash algorithms for lightweight cryptography algorithms have been selected by the NIST as lightweight cryptography algorithm standards. AEAD is a form of encryption that simultaneously provides confidentiality, integrity, and authentication. A cause for its emergence is that a simple encryption/decryption algorithm does not have a function of authentication, and a decryptor does not know whether decrypted information has been tampered by an intermediary. Therefore, an algorithm with both encryption and authentication functions is needed. The ASCON-AEAD algorithm as a whole uses a sponge cryptography construction. The ASCON-AEAD algorithm includes four phases, namely initialization, associated data, plaintext/ciphertext, and finalization, which mainly involves parameters a key *K,* plaintext *P*, associated information *A,* and ciphertext *C. IV* is a pre-configured initial vector, and *N* is a nonce. ASCON-AEAD may generate *T,* i.e., an authentication tag, which is used for integrity authentication. For ASCON-AEAD, *K, A,* and *P* are input during encryption to obtain *C* and *T, K, A,* and *C* are input during decryption to obtain *P* and *T',* and *T* and *T' are* compared to authenticate *A.*

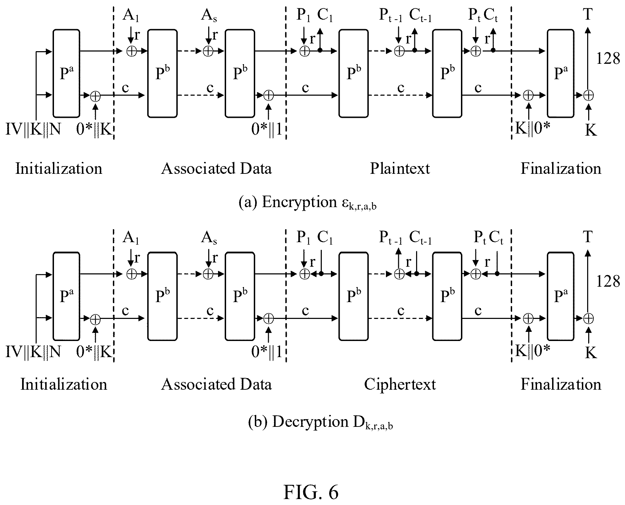

Further, with reference to FIG. 6, FIG. 6 illustrates an encryption/decryption process of ASCON-AEAD, where the encryption/decryption process is substantially the same and merely differs in an input of plaintext/ciphertext. The encryption process of ASCON-AEAD illustrated in FIG. 6 is taken as an example for illustration.

In an initialization phase, a vector *IV* is initialized based on a key length, a data packet length (*r*)*,* and round numbers (*a, b)* of round operations, and 0 is padded backward until 160 bits. Generated keys of lengths 64 bits and 128 bits are concatenated with *N* into a 320-bit internal state, upper and lower two "main lines" *Sr* and *Sc* are obtained after a total of 12 rounds of round operations, an XOR operation with a key (padding 0 forward until full bits) is performed in the lower part *Sc* (inner part) of the "main lines" to complete the initialization. The upper and lower two "main lines" are divided based on the data packet length (r). For example, in ASCON-128, *r* = 128, and thus a 128-bit internal state is in the upper part *Sr* (outer part) of the process, while a 192-bit internal state (320-128 = 192 bits) is in the lower part *Sc* of the process. Information input in the initialization phase in FIG. 6 includes *IV, K,* and *N.* Herein, specific contents of *IV* are not limited in this embodiment. *K* in FIG. 6 may be replaced with the above "first key", for example, *K* may be replaced with the "first key *K_{AF}"* in this embodiment. Alternatively, *K* may be calculated based on the first key and at least one of a first sequence number, a nonce *R*, an anonymity key, or a physical layer key, where a calculation manner of *K* is not limited in this embodiment. *N* may be the nonce *R* in the above embodiments, or may be another nonce randomly generated by a first device. In FIG. 6, a round number *a* is represented by *P^{a},* and a round number *b* is represented by *P^{b}.* In FIG. 6, a main line *Sr* is represented by *"r",* and a main line *Sc* is represented by *"c".*

In an associated data phase, associated data *(A)* is parsed into s groups (*A1* to *As* in FIG. 6, respectively) according to the size (*r*) of packet data blocks. Any group of associated data (*Ai*) is XORed into the internal state *Sr* in the upper part of the process, then a next group of associated data (*Ai+1*) is introduced after multiple rounds of round operations, and after all the associated data is introduced, the internal state *Sc* in the lower part of the process is XORed (0-1), thereby completing the introduction of the associated data. In this example, the associated data *A* may include at least one of: service data, full text of a message, an identifier of the first device, a service type indicator, or an identifier of a network-side device. When the first device is an AIoT device, the identifier of the first device may be an ID of the AIoT device. It may be noted that, if this calculation is mainly used for message integrity protection, the above associated data may include the service data and/or the full text of the message, or if this calculation is mainly used for authentication and authorization for a service or an identity, the above associated data may include at least one of the identifier of the first device, the service type indicator, or the identifier of the network-side device.

In a plaintext phase (or encryption phase), plaintext (*P*) is parsed into t groups (for example, *P1* to *Pt* illustrated in FIG. 6) according to the size (*r*) of packet data blocks, and one bit "1" and multiple bits "0" are added to the last bit in the case where the plaintext is unable to be integrally divided, to ensure that the plaintext can be integrally divided. Any group of packet plaintext (*Pi*) is XORed into the internal state *Sr* in the upper part of the process, and then corresponding packet message ciphertext (*Ci*) is directly output. Then, a next group of packet plaintext (*Pi+1*) is introduced after multiple rounds of round operations, and after all the plaintext is introduced, the encryption is completed.

In a finalization phase, the internal state *Sc* in the lower part of the process is XORed with a key (padding 0 backward until full bits), and then multiple rounds of round operations are performed. The first 128 bits of the internal state *S* are extracted and XORed with the first 128 bits of the key, then a result is used as a tag, and the previously grouped ciphertext is concatenated and then output together with the tag.

In some embodiments, the first device calculates the ciphertext data based on the first key and the data to be sent as follows. The first device calculates a second key based on the first key, and the first device calculates the ciphertext data based on the second key and the data to be sent.

The first device calculating the second key based on the first key may mean that the first device calculates the second key based on the first key and a sixth parameter by using a fifth calculation manner. The sixth parameter may include at least one of: an identifier of an encryption algorithm, a length of the identifier of the encryption algorithm, a fourth specified value, an identifier of an output key which is also referred to as an identifier of the second key, a length of the identifier of the second key, the nonce, or a length of the nonce.

The fifth calculation manner may include at least one of: a KDF, a first authentication function (for example, represented by *f1*)*,* a second authentication function (for example, represented by *f*2), a third key generation function (for example, represented by *f3*), a fourth key generation function (for example, represented by *f4*)*,* a fifth key generation function (for example, represented by *f5*)*,* or the like.

In this embodiment, the second key may be an encryption key or a confidentiality key, for example, the second key may be represented by *K_{CK-AIoT}.* That is, the encryption key can be derived based on the first key, and the second key is used for encrypting data sent by the first device and/or decrypting data received by the first device. Specific algorithms for the encryption and/or decryption are not limited in this embodiment.

The encryption algorithm may be an algorithm for calculating the encryption key (or the second key or the confidentiality key). The identifier of the encryption algorithm may include at least one of a number of a specific algorithm of the encryption algorithm, a serial number of the specific algorithm of the encryption algorithm, a name of the specific algorithm of the encryption algorithm, or the like.

The fourth specified value may be set according to an actual situation. The fourth specified value may be the same as or different from the first specified value in the above embodiments, and/or the fourth specified value may be the same as or different from the second specified value in the above embodiments, each of which falls within the protection scope of this embodiment. The fourth specified value may be a fixed value (or a fourth fixed value) assigned by the third party. Exemplarily, the fourth specified value may be the same as the second specified value and the first specified value, for example, the fourth specified value may be represented by *FC,* and a value of the fourth specified value may be *FC=0x7E.* This is merely taken as an example for illustration, and in actual processing, a specific value of the fourth specified value may also be another value, which will not be exhaustively listed herein.

The identifier of the second key may be an identifier of a type of the second key. For example, when the type of the second key is an encryption key, the identifier of the second key is an identifier of a type of the encryption key. In some examples, the identifier of the second key may be 0x00.

The related illustration of the length and the nonce described above is the same as that in the above embodiments, which will not be repeated.

Exemplarily, the sixth parameter may include the identifier of the encryption algorithm, the length of the identifier of the encryption algorithm, the fourth specified value, the identifier of the output key which is also referred to as the identifier of the second key, the length of the identifier of the second key, the nonce, and the length of the nonce. Accordingly, the first device may generate the second key *K_{CK-AIoT}* by using a KDF, where input parameters include the first key (for example, *K_{AF}* or *K_{gate}* in the above embodiments), the identifier of the encryption algorithm, the length of the identifier of the encryption algorithm, a fixed value such as *FC=0x7E* assigned by the third party, the identifier of the output key (for example, if a confidentiality key *K_{CK-AIoT}* is to be output, an input identifier is 0x00), a length of the identifier of the output key, the nonce *R*, the length of the nonce *R*, and other information, respectively.

It may be understood that, this is merely taken as an example for illustration, and in actual processing, the sixth parameter may include only one or more of the parameters listed above or may include more parameters. For example, the sixth parameter may include only the nonce. That is, the first device may generate the second key *K_{CK-AIoT}* by using a KDF, where input parameters include the first key (for example, *K_{AF}* or *K_{gate}* in the above embodiments) and the nonce *R*, respectively. For another example, the sixth parameter may include the nonce *R*, the length of the nonce *R*, and the identifier of the encryption algorithm. That is, the first device may generate the second key *K_{CK-AIoT}* by using a KDF, where input parameters include the first key (for example, *K_{AF}* or *K_{gate}* in the above embodiments), the identifier of the encryption algorithm, the nonce *R*, the length of the nonce *R*, and other information, respectively. All possible combinations will not be exhaustively listed herein.

The first device calculating the ciphertext data based on the second key and the data to be sent may mean that the first device generates the ciphertext data after using the second key for encryption protection of the data to be sent. Herein, a specific encryption manner used for the encryption protection may be any one of encryption algorithms or encryption calculation functions in the related art, or may be a combination of multiple encryption algorithms (or multiple encryption calculation functions), which is not be limited in this embodiment.

In some embodiments, the second message may further carry at least one of: third authentication information, where the third authentication information is used for authenticating the first device; or verification information, where the verification information is used for verifying integrity of the second message.

Accordingly, the method may further include at least one of the following. The first device calculates a third key based on the first key, and calculates the verification information based on the third key and the ciphertext data. The first device calculates first intermediate information based on the first shared key and the nonce, and calculates the third authentication information based on the first intermediate information and a third parameter. The third parameter includes at least one of: the first shared key, the nonce, a length of the nonce, a length of the first intermediate information, or a third specified value.

That is to say, in this embodiment, the first device first calculates the second key based on the first key, and then calculates the ciphertext data based on the second key and the data to be sent. Further, the first device may also calculate the third authentication information and/or the verification information, so that a receiving end can authenticate the first device (or authenticate an identity of the first device, or authenticate validity of the first device) and/or verify integrity of the second message.

The first device calculating the third key based on the first key may mean that the first device calculates the third key based on the first key and a seventh parameter by using a sixth calculation manner. The seventh parameter may include at least one of: an identifier of an integrity protection algorithm, a length of the identifier of the integrity protection algorithm, a fifth specified value, an identifier of an output key which is also referred to as an identifier of the third key, a length of the identifier of the third key, the nonce, or a length of the nonce.

The sixth calculation manner may include at least one of: a KDF, a first authentication function (for example, represented by *f1*)*,* a second authentication function (for example, represented by *f*2), a third key generation function (for example, represented by *f3*), a fourth key generation function (for example, represented by *f4*)*,* a fifth key generation function (for example, represented by *f5*)*,* or the like. It may be noted that, the sixth calculation manner and the fifth calculation manner may be the same or different, both of which fall within the protection scope of this embodiment.

In this embodiment, the third key may be an integrity protection key or an integrity key, for example, the third key may be represented by *K_{IK-AIoT}.* That is, the integrity key can be derived based on the first key. The third key is used for integrity protection of a message sent by the first device and/or integrity verification of a message received by the first device. Specific algorithms for the integrity protection and/or integrity verification are not limited in this embodiment.

The integrity protection algorithm may be an algorithm for calculating the integrity key (or the third key or the integrity protection key). The identifier of the integrity protection algorithm may include at least one of a number of a specific algorithm of the integrity protection algorithm, a serial number of the specific algorithm of the integrity protection algorithm, a name of the specific algorithm of the integrity protection algorithm, or the like.

The fifth specified value may be set according to an actual situation. The fifth specified value may be the same as or different from the first specified value in the above embodiments, and/or the fifth specified value may be the same as or different from the second specified value in the above embodiments, and/or the fifth specified value may be the same as or different from the fourth specified value in the above embodiments, each of which falls within the protection scope of this embodiment. The fifth specified value may be a fixed value (or a fifth fixed value) assigned by the third party. Exemplarily, the fifth specified value may be the same as the fourth specified value, for example, the fifth specified value may be represented by *FC,* and a value of the fifth specified value may be *FC=0x7E.* This is merely taken as an example for illustration, and in actual processing, a specific value of the fifth specified value may also be another value, which will not be exhaustively listed herein.

The identifier of the third key may be an identifier of a type of the third key. For example, when the type of the third key is an integrity key, the identifier of the third key is an identifier of a type of the integrity key. In some examples, the identifier of the third key may be 0x01.

The related illustration of the length and the nonce described above is the same as that in the above embodiments, which will not be repeated.

Exemplarily, the seventh parameter may include the identifier of the integrity protection algorithm, the length of the identifier of the integrity protection algorithm, the fifth specified value, the identifier of the output key which is also referred to as the identifier of the third key, the length of the identifier of the third key, the nonce, and the length of the nonce. Accordingly, the first device may generate the integrity key *K_{IK-AIoT}* by using a KDF, where input parameters include the first key (for example, *K_{AF}* or *K_{gate}* in the above embodiments), the identifier of the integrity protection algorithm, the length of the identifier of the integrity protection algorithm, a fixed value such as *FC=0x7E* assigned by the third party, the identifier of the output key (for example, if an integrity key *K_{IK-AIoT}* is to be output, an input identifier is 0x01), a length of the identifier of the output key, the nonce *R*, the length of the nonce *R*, and other information, respectively.

It may be understood that, this is merely taken as an example for illustration, and in actual processing, the seventh parameter may include only one or more of the parameters listed above or may include more parameters. For example, the seventh parameter may include the nonce *R*, the length of the nonce *R*, and the identifier of the integrity protection algorithm. That is, the first device may generate the integrity key *K_{CK-AIoT}* by using a KDF, where input parameters include the first key (for example, *K_{AF}* or *K_{gate}* in the above embodiments), the identifier of the integrity protection algorithm, the nonce *R*, the length of the nonce *R*, and other information, respectively. All possible combinations will not be exhaustively listed herein.

Calculating the verification information based on the third key and the ciphertext data may mean that the first device uses the third key for integrity protection of the ciphertext data to generate the verification information. Herein, a specific calculation manner used for the integrity protection may be any one of integrity algorithms or integrity calculation functions in the related art, or may be a combination of multiple integrity algorithms (or multiple integrity calculation functions), which is not be limited in this embodiment. The above verification information may refer to a verification code for verifying integrity of a message. In some examples, the verification information may include an integrity verification code, which may be, for example, represented by *MAC3.* In some examples, the verification information may include a message integrity check (MIC) code, which may be, for example, represented by *MIC1* or *MIC.*

The first device calculating the first intermediate information based on the first shared key and the nonce may mean that the first device calculates the first intermediate information based on the first shared key and the nonce by using a seventh calculation manner.

The seventh calculation manner may include at least one of: a first authentication function (for example, represented by *f1*)*,* a second authentication function (for example, represented by *f2*), a third key generation function (for example, represented by *f3*), a fourth key generation function (for example, represented by *f4*)*,* a fifth key generation function (for example, represented by *f5*)*,* or the like.

The first intermediate information may be a first response (RES). Exemplarily, the first intermediate information may be directly represented by *RES,* or may be represented by a first intermediate RES, or may be represented by the first RES, or may be represented by *RES1.*

Exemplarily, assuming that the seventh calculation manner is *f2*, the first device may calculate the first RES based on the first shared key *K* and the nonce R by using the function*f2*.

It may be understood that, the calculation of the first intermediate information may not be limited to the calculation of the first intermediate information based on the first shared key and the nonce listed above, and other parameters such as at least one of a first sequence number, a length of the nonce, or the like can also be added. However, it may be noted that, different parameters and/or different calculation manners need to be used for calculating the first intermediate information and the second authentication information. For example, if the first shared key, the first sequence number, and the nonce are used for calculating the first intermediate information, and the first shared key, the first sequence number, and the nonce are also used for calculating the second authentication information, then the function *f2* can be used for calculating the first intermediate information, and another function except the function *f2* can be used for calculating the second authentication information. For another example, if the function *f2* is used for calculating both the first intermediate information and the second authentication information, then the first shared key and the nonce are used for calculating the first intermediate information, and the first shared key, the first sequence number, and the nonce are used for calculating the second authentication information. This is merely taken as an example for illustration and is not to be construed as a limitation of manners of generating the first intermediate information and the second authentication information.

Calculating the third authentication information based on the first intermediate information and the third parameter may mean that the first device calculates the third authentication information based on the first intermediate information and the third parameter by using an eighth calculation manner.

The third authentication information may be an RES. Exemplarily, the third authentication information may be represented by *RES*,* or may be represented by *RES2,* etc. As long as the third authentication information is distinguishably represented in a different manner from the first intermediate information, it falls within the protection scope of this embodiment.

The eighth calculation manner may include at least one of: a KDF, a first authentication function (for example, represented by *f1*)*,* a second authentication function (for example, represented by *f*2), a third key generation function (for example, represented by *f3*), a fourth key generation function (for example, represented by *f4*)*,* a fifth key generation function (for example, represented by *f5*)*,* or the like.

The third specified value may be set according to an actual situation. The third specified value may be the same as or different from the first specified value in the above embodiments, and/or the third specified value may be the same as or different from the second specified value in the above embodiments, and/or the third specified value may be the same as or different from the fourth specified value in the above embodiments, each of which falls within the protection scope of this embodiment. The third specified value may be a fixed value (or a third fixed value) assigned by the third party. Exemplarily, the third specified value may be represented by *FC* (or *FC3),* and a value of the third specified value may be *FC=0x6B.* This is merely taken as an example for illustration, and in actual processing, a specific value of the third specified value may also be another value, which will not be exhaustively listed herein.

During calculation of the third authentication information, each parameter in the above third parameters may be used, or only one or more parameters in the third parameter may be used, or other parameters may be included in addition to the third parameter listed above. For example, if the eighth calculation manner is a KDF, the third authentication information is represented by *RES*,* and the third parameter may include the first shared key (for example, a root key *K),* the nonce R, the length of the nonce *R, RES* (i.e., first intermediate information), a length of *RES,* and the third specified value (for example, *0x6B*)*,* then the first device generates *RES** by using the KDF, where input parameters include the root key *K,* the nonce *R*, the length of the nonce *R, RES,* the length of *RES,* and *0x6B.* For another example, if the eighth calculation manner is *f2*, the third authentication information is represented by *RES*,* and the third parameter may include the first shared key (for example, a root key *K),* the nonce R, and *RES* (i.e., first intermediate information), then the first device generates *RES** by using the function *f2*, where input parameters include the root key *K*, the nonce *R*, and *RES.* For another example, since the first shared key is used for calculating the first intermediate information, the third parameter may not include the first shared key. As an example, if the eighth calculation manner is *f2*, the third authentication information is represented by *RES*,* and the third parameter includes the nonce *R* and *RES* (i.e., first intermediate information), then the first device generates *RES** by using the function *f2*, where input parameters include the nonce *R* and *RES.* The above is merely taken as an example for illustration of generating the third authentication information, and all possible cases will not be exhaustively listed herein.

Processing such as obtaining the second authentication information, obtaining the first key, and obtaining the ciphertext data by the first device have been described in detail in the above embodiments. In the solution provided in this embodiment, the first device may access the 5G network or access the WLAN. The following will describe the interaction between the first device and another device and the related processing by the another device in combination with different scenarios.

In some possible embodiments, the first device accesses the 5G network.

In terms of the processing by the first device, the method may further include the following. The first device sends a third message to the second device, where the third message is used for requesting authentication, and the third message carries an identifier of the first device. Accordingly, in terms of the processing by the second device, the method may further include the following. The second device receives the third message sent by the first device, where the third message is used for requesting authentication, and the third message carries an identifier of the first device.

In this embodiment, the second device may be an access-network device or a terminal device.

An execution occasion for sending the third message by the first device to the second device may be before the first device receives the first message.

In an embodiment, the first device sending the third message to the second device may mean that the first device actively sends the third message to the second device.

A cause for actively sending the third message by the first device to the second device may be that the first device may actively send the third message to the second device in the case where the first device has service data to be reported; or the first device may actively send the third message to the second device on a periodic basis. A length of a period of the periodicity may be set according to an actual situation, for example, may be every day, or every 2 hours, or longer or shorter, which will not be exhaustively listed and limited herein. It may be understood that regarding the cause for actively sending the third message by the first device to the second device, this is also merely taken as an example for illustration, which will not be exhaustively listed and limited.

In an embodiment, the first device may send the third message to the second device as follows. The first device receives a wake-up signal, and the first device sends the third message to the second device.

A function of the wake-up signal may include at least one of: triggering the first device to report service data, supplying power to the first device, triggering authentication of the first device, or the like. In some examples, the wake-up signal may be referred to as any one of a trigger signal, a power supply signal, a trigger-and-power-supply signal, and the like, and all possible names of the wake-up signal will not be exhaustively listed herein.

The wake-up signal may be sent by the above second device, or may be sent by another device except the second device. A device for sending the wake-up signal will not be limited and exhaustively listed in this embodiment.

Exemplarily, the wake-up signal may be sent by the above second device. In this example, in the case where the second device receives from a network side indication information indicating to wake up the first device, the second device may send the wake-up signal to the first device. A cause for waking up the first device by the network side may be that the network side needs to obtain service data of the first device, etc. A cause for sending the wake-up signal will also not be limited and exhaustively listed in this embodiment. The network side may include the above third device, for example, may include an AF and/or a second core-network device.

The indication information indicating to wake up the first device may carry an identifier of the first device. When the above second device is an access-network device, the indication information indicating to wake up the first device may be carried in any signalling or message between a core network and the access-network device. When the above second device is a terminal device, the indication information indicating to wake up the first device can be directly sent from a core-network side to the second device, that is, the indication information indicating to wake up the first device may be carried in any non-access-stratum (NAS) message; or, the indication information indicating to wake up the first device can be sent from the core-network side to the second device via an access-network device corresponding to the second device, that is, the indication information indicating to wake up the first device may be carried in any access-stratum (AS) message.

Exemplarily, the wake-up signal may be sent by another device except the above second device. The another device may be the above third device, or may be an access-network device corresponding to the first device, or may be another device except the second device, the third device, and the first core-network device described above.

For example, in terms of sending the wake-up signal by the third device, the third device may be the above second core-network device. Exemplarily, the wake-up signal can be sent to the first device in the case where the second core-network device needs to obtain service data of the first device. For another example, in terms of sending the wake-up signal by a first access-network device corresponding to the first device, the first access-network device may send the wake-up signal to the first device upon receiving from a network side indication information indicating to wake up the first device. In terms of sending the wake-up signal to the first device, the illustration of the network side is the same as that in the above embodiments, which will not be repeated.

When the second device is a terminal device, the third message may be any sidelink message. When the second device is an access-network device, the third message may be any AS message.

In some embodiments, after the second device receives the third message sent by the first device, the method may further include one of the following. The second device sends a fourth message to a first core-network device, where the fourth message is used for requesting authentication, and the fourth message carries the identifier of the first device and a second sequence number. The second device sends a fifth message to a third device, where the fifth message is used for requesting authentication, and the fifth message carries the identifier of the first device and the second sequence number.

In addition, after the second device receives the third message and before the second device sends the fourth message, or after the second device receives the third message and before the second device sends the fifth message, the method may further include the following. The second device determines whether a mapping relationship exists between the identifier of the first device and an identifier of the second device. If the mapping relationship does not exist, the second device rejects the third message, or if the mapping relationship exists, the second device performs subsequent processing. Herein, the identifier of the second device may be an ID and/or a network identifier of the second device. For example, when the second device is a terminal device, the identifier of the second device may be an SUPI of the second device. The mapping relationship between the identifier of the second device and the identifier of the first device may be preset in the second device. A manner of obtaining the mapping relationship is not limited in this embodiment.

The second sequence number can be calculated based on a second shared key. Specifically, the processing by the second device further includes the following. The second device calculates the second sequence number based on the second shared key, where the second shared key is shared by the second device and the first device. The detailed illustration of the second shared key is the same as that in the above embodiments, which will not be repeated.

A specific calculation manner of the second sequence number may be the same as the calculation of the first sequence number by the first device as described above, which will not be repeated. It may be understood that in this embodiment, in order to distinguish sequence numbers generated by different devices, a sequence number calculated by the first device is referred to as the first sequence number, and a sequence number calculated by the second device is referred to as the second sequence number. For example, the first sequence number may be represented by *SQN1,* and the second sequence number may be represented by *SQN2.* In this example, *SQN1* may theoretically be the same as *SQN2.* In some other possible examples, since the first sequence number calculated by the first device may theoretically be the same as the second sequence number calculated by the second device, sequence numbers respectively calculated by the first device and the second device may not be distinguished, i.e., each represented by a sequence number (for example, each represented by *SQN).*

When the second device is a terminal device, the second device may send the fourth message to the first core-network device, and accordingly, the fourth message may be any NAS message. Alternatively, when the second device is a terminal device, the second device may send the fifth message to the third device. The third device may be an AF, and in this case, the fifth message may be any message or signalling transmitted by a terminal to the AF. The third device may be a second core-network device, and in this case, the fifth message may be any NAS message.

When the second device is an access-network device, the second device may send the fourth message to the first core-network device, where the fourth message may be any message or signalling transmitted by the access-network device to the first core-network device. Alternatively, when the second device is an access-network device, the second device may send the fifth message to the third device. The third device may be an AF, and in this case, the fifth message may be any message or signalling transmitted by the access-network device to the AF. The third device may be a second core-network device, and in this case, the fifth message may be any message or signalling transmitted by the access-network device to the second core-network device.

In some embodiments, the fourth message further carries information related to the second device and/or the fifth message further carries the information related to the second device. In the case where the fifth message further carries the information related to the second device, the seventh message may also carry the information related to the second device.

The information related to the second device may be at least one of an ID and/or a network identifier of the second device. The illustration of the ID and the network identifier is the same as that in the above embodiments, which will not be repeated.

In a preferred example, when the second device is a terminal device, identifier related information may be an SUCI. In some possible examples, when the second device is an access-network device, the fourth message may not carry the information related to the second device and/or the fifth message may not carry the information related to the second device. In some possible examples, when the second device is an access-network device, the information related to the second device may be an ID and/or a network identifier of the second device.

In some embodiments, after the second device sends the fifth message to the third device, the processing by the third device may further include the following. The third device receives a fifth message from the second device, where the fifth message is used for requesting authentication, and the fifth message carries an identifier of the first device and a second sequence number. The third device sends a seventh message to a first core-network device, where the seventh message is used for requesting to obtain a key, and the seventh message carries the identifier of the first device and the second sequence number.

Exemplarily, the third device sending the seventh message to the first core-network device may mean that the third device directly sends the seventh message to the first core-network device. Exemplarily, the third device sending the seventh message to the first core-network device may mean that the third device may send the seventh message to the first core-network device via a third core-network device. The third core-network device may be a network exposure function (NEF). In this example, the third device may be the above AF.

In some embodiments, the processing by the first core-network device may further include one of the following. The first core-network device receives a fourth message from a second device, where the fourth message is used for requesting authentication, and the fourth message carries an identifier of a first device and a second sequence number. The first core-network device receives a seventh message from the third device, where the seventh message is used for requesting to obtain a key, and the seventh message carries the identifier of the first device and the second sequence number.

After the first core-network device receives the fourth message from the above second device, or the first core-network device receives the seventh message from the above third device, the first core-network device may calculate a fourth key.

Specifically, the first core-network device may calculate the fourth key as follows. The first core-network device calculates the fourth key based on the first shared key, the nonce, and a fourth parameter. The first shared key is shared by the first core-network device and the first device, and the fourth parameter includes at least one of: the identifier of the first device, a length of the identifier of the first device, the second sequence number, a length of the second sequence number, a length of the nonce, or a second specified value.

In this embodiment, the first shared key is shared by the first core-network device and the first device.

The nonce is generated by the first core-network device. A manner of generating the nonce by the first core-network device is not limited in this embodiment.

In some possible examples, the seventh message does not carry the information related to the second device, and the fourth message does not carry the information related to the second device. In this case, the first core-network device may determine a first shared key corresponding to the first device based on the identifier of the first device carried in the fourth message or the seventh message. That is, first shared keys corresponding to identifiers of different devices can be pre-stored in the first core-network device, and the first shared key corresponding to the first device can be determined simply based on the identifier of the first device carried in a received message.

In some possible examples, in the case where the fourth message further carries the information related to the second device, or the seventh message carries the information related to the second device, the first core-network device may first obtain a first shared key corresponding to the first device based on a mapping relationship between the information related to the second device and the identifier of the first device.

In an example, the information related to the second device may be an SUCI of the second device. In this case, the first core-network device may first decrypt the SUCI of the second device to obtain an SUPI of the second device, and obtain a first shared key corresponding to the first device based on a mapping relationship between the SUPI of the second device and the identifier of the first device. A manner of decrypting the SUCI of the second device to obtain the SUPI of the second device is not limited in this embodiment. Obtaining the first shared key corresponding to the first device based on the mapping relationship between the SUPI of the second device and the identifier of the first device may refer to obtaining the first shared key corresponding to the first device based on the identifier of the first device in the case where it is determined that the SUPI of the second device has the mapping relationship with the identifier of the first device.

In an example, the information related to the second device may have a mapping relationship with an identifier of a device, and first shared keys corresponding to identifiers of different devices can be pre-stored in the first core-network device. The first core-network device may determine the identifier of the first device having the mapping relationship based on the information related to the second device, and obtain a corresponding first shared key based on the identifier of the first device. Herein, the first core-network device may determine the identifier of the first device having the mapping relationship based on the information related to the second device as follows. The first core-network device may determine, based on the information related to the second device, an identifier of a device that has the mapping relationship with the information related to the second device, and determine whether the identifier of the device is the same as the identifier of the first device. If the identifier of the device is the same as the identifier of the first device, the first core-network device determines that the second device has the mapping relationship with the first device.

Herein, types and contents of parameters included in the fourth parameter correspond to types and contents of parameters included in the first parameter, respectively. The remaining parameters in the fourth parameter other than the second sequence number have the same contents and meanings as their counterparts in the first parameter. The second sequence number can be calculated by the above second device, and a specific calculation manner of the second sequence number is the same as that in the above embodiments, which will not be repeated. In addition, a relationship between the second sequence number and the first sequence number has been described in detail in the above embodiments, which will not be repeated.

The calculation of the fourth key by the first core-network device based on the first shared key, the nonce, and the fourth parameter may be the same as the calculation of the first key by the first device based on the first shared key, the nonce, and the first parameter. In other words, the first core-network device uses the same parameter type and calculation manner as those used by the first device, to calculate the fourth key, where the fourth key may theoretically be the same as the first key. The fourth key calculated by the first core-network device and the first key may be used as a pair of keys for each other, and the fourth key also serves as a security key. The security key may also be referred to as a communication security key, an authentication and data security key, or the like.

In this embodiment, in the case where the first device accesses the 5G architecture, the first key and the fourth key are security keys between the first device and the third device, which are used for realizing identity authentication and data protection between the first device and the third device. In this example, assuming that the third device is an AF, the first key may be represented by *K_{AF},* and the fourth key may also be represented by *K_{AF},* or the fourth key may be represented by *K'_{AF}* to distinguish between generating entities.

In some embodiments, after calculating the fourth key, the first core-network device directly sends an eighth message to the third device, where the eighth message carries only the fourth key and the nonce. Accordingly, the processing by the third device may include the following. The third device calculates the first authentication information based on the fourth key.

The first authentication information may be a first MAC. The representation manner and the related illustration of the first authentication information are the same as those in the above embodiments, which will not be repeated.

In some examples, the third device calculates the first authentication information based on the fourth key by using a second calculation manner. In this example, the second calculation manner is the same as that in the above embodiments, which will not be repeated. A specific processing manner used by the third device may be the same as a manner of calculating the second authentication information by the first device based on the first key by using the second calculation manner.

In some examples, the third device calculates the first authentication information based on the fourth key as follows. The third device calculates the first authentication information based on the fourth key and a second parameter. The second parameter includes at least one of: the nonce, a length of the nonce, or a first specified value.

The illustration of the second parameter is the same as that in the above embodiments, which will not be repeated.

The third device may calculate the first authentication information as follows. The third device calculates the first authentication information based on the fourth key and the second parameter by using a second calculation manner. A specific processing manner of calculating the first authentication information by the third device based on the fourth key and the second parameter by using the second calculation manner and specific contents of the second parameter used by the third device may be the same as the calculation of the second authentication information by the first device based on the first key and the second parameter, which will not be repeated.

In some embodiments, after calculating the fourth key, the first core-network device further calculates the first authentication information, and the eighth message sent to the third device carries the first authentication information in addition to the fourth key and the nonce. The method further includes one of the following. The first core-network device calculates the first authentication information based on the first shared key, the nonce, and the second sequence number. The first core-network device calculates the first authentication information based on the fourth key.

The specific calculation of the first authentication information by the first core-network device based on the first shared key, the nonce, and the second sequence number may be the same as the specific calculation of the second authentication information by the first device based on the first shared key, the nonce, and the first sequence number in the above embodiments. The difference merely lies in that the first device calculates the second authentication information based on the first sequence number, while the first core-network device calculates the first authentication information based on the second sequence number. The calculation manners of the first sequence number and the second sequence number and the relationship between the first sequence number and the second sequence number have also been described in detail in the above embodiments, which will not be repeated herein.

In some examples, the first core-network device calculates the first authentication information based on the fourth key by using a second calculation manner. In this example, the second calculation manner is the same as that in the above embodiments, which will not be repeated. A specific processing manner used by the first core-network device may be the same as a manner of calculating the second authentication information by the first device based on the first key by using the second calculation manner.

In some examples, the first core-network device calculates the first authentication information based on the fourth key as follows. The first core-network device calculates the first authentication information based on the fourth key and a second parameter. The second parameter includes at least one of: the nonce, the length of the nonce, or a first specified value.

The illustration of the second parameter is the same as that in the above embodiments, which will not be repeated.

The first core-network device may calculate the first authentication information as follows. The first core-network device calculates the first authentication information based on the fourth key and the second parameter by using a second calculation manner. A specific processing manner of calculating the first authentication information by the first core-network device based on the fourth key and the second parameter by using the second calculation manner and specific contents of the second parameter used by the first core-network device may be the same as the calculation of the second authentication information by the first device based on the first key and the second parameter, which will not be repeated.

In some embodiments, after obtaining the fourth key, the first authentication information, and the nonce, the third device locally stores the fourth key, and the third device may send a sixth message to the second device. Accordingly, the processing by the second device may further include the following. The second device receives the sixth message sent by the third device, where the sixth message carries an identifier of the first device, the nonce, and the first authentication information.

The second device may determine a device corresponding to the sixth message based on the identifier of the first device, and then send the first message. Specifically, the second device sends the first message as follows. The second device sends the first message to the first device. Accordingly, the first device receives the first message as follows. The first device receives the first message from the second device.

In this embodiment, after the first device calculates the first key, calculates the second authentication information, and finally calculates the ciphertext data, the first device sends the second message as follows. The first device sends the second message to the second device. Accordingly, in terms of the processing by the second device, the method further includes the following. The second device sends to the third device a second message from the first device, where the second message carries the ciphertext data. The second message further carries at least one of: third authentication information, where the third authentication information is used for authenticating the first device; or verification information, where the verification information is used for verifying integrity of the second message.

Processing such as calculating the first key, calculating the second authentication information, and finally calculating the ciphertext data by the first device will not be repeated. The contents that may be carried in the second message and the detailed illustration thereof have also been described in detail in the above embodiments and will not be repeated.

In some embodiments, after obtaining the fourth key, the first authentication information, and the nonce, the third device locally stores the fourth key, and the third device may directly send the first message. Specifically, the third device sends the first message as follows. The third device sends the first message to the first device. Accordingly, the first device receives the first message as follows. The first device receives the first message from the third device.

In this embodiment, after the first device calculates the first key, calculates the second authentication information, and finally calculates the ciphertext data, the first device sends the second message as follows. The first device sends the second message to the third device. Accordingly, the third device receives the second message as follows. The third device receives the second message from the first device. The second message further carries at least one of: third authentication information, where the third authentication information is used for authenticating the first device; or verification information, where the verification information is used for verifying integrity of the second message. Processing such as calculating the first key, calculating the second authentication information, and finally calculating the ciphertext data by the first device will not be repeated. The contents that may be carried in the second message and the detailed illustration thereof have also been described in detail in the above embodiments and will not be repeated.

In some embodiments, after obtaining the second message, the third device may obtain data (i.e., service data reported by the first device) by decrypting the ciphertext data and complete the authentication at the same time. The second message further carries third authentication information, and in terms of the processing by the third device, the method further includes the following. The third device calculates data and fourth authentication information based on the fourth key, the ciphertext data, and the third authentication information, and stores the data when the fourth authentication information is the same as the third authentication information.

Specifically, the third device may calculate the data and the fourth authentication information based on the fourth key, the ciphertext data, and the third authentication information as follows. The third device calculates the data and the fourth authentication information based on the fourth key, the ciphertext data, and the third authentication information by using a manner corresponding to a fourth calculation manner.

The fourth calculation manner may be an ASCON algorithm or an ASCON-AEAD algorithm. Specifically, the fourth calculation manner in this embodiment may be an encryption part of the ASCON-AEAD algorithm, and accordingly, the manner corresponding to the fourth calculation manner may be a decryption part of the ASCON-AEAD algorithm. That is, the third device calculating the data and the fourth authentication information based on the fourth key, the ciphertext data, and the third authentication information by using the manner corresponding to the fourth calculation manner may mean that: the third device calculates the data and the fourth authentication information based on the fourth key, the ciphertext data, and the third authentication information by using the decryption part of the ASCON-AEAD algorithm.

Herein, the third device may calculate the data and the fourth authentication information based on the fourth key, the ciphertext data, and the third authentication information by using the decryption part of the ASCON-AEAD algorithm as follows. The third device calculates the data and the fourth authentication information based on the fourth key, the ciphertext data, the third authentication information, and an eleventh parameter by using the decryption part of the ASCON-AEAD algorithm. The tenth parameter includes at least one of: an identifier of the first device, a service type indicator, an identifier of a network-side device, a second sequence number, the nonce, or an anonymity key. The eleventh parameter has the same type and the same function as the tenth parameter in the above embodiments, except that the "first sequence number" in the tenth parameter is replaced with the "second sequence number" in the eleventh parameter at the third device side. It may be noted that, specific parameters used for decryption by the third device may correspond to specific parameters used for encryption by the first device, and the specific processing by the third device will not be described in detail herein. With reference to FIG. 6, FIG. 6 also illustrates a decryption process of ASCON-AEAD. The related illustration of an input parameter A in the decryption process is the same as the related illustration of A in the above encryption process, and the difference lies in that an input parameter K in the decryption process is the above fourth key, C is the above ciphertext data, output P is the above data (i.e., data obtained through decryption), and T' represents the above fourth authentication information. The processing of the decryption process is the same as the structure of the above encryption process, and inputs and outputs in the encryption and decryption processes in terms of plaintext and ciphertext are reversed, which therefore will not be repeated.

Storing the data when the fourth authentication information is the same as the third authentication information may mean that: when the fourth authentication information is the same as the third authentication information, the third device determines that an identity of the first device is valid, receives the second message, and stores the data. Determining that the identity of the first device is valid may refer to determining that the authentication for the first device succeeds, determining that the authentication for validity of the first device succeeds, or the like.

Additionally, the processing by the third device may further include the following. When the fourth authentication information is different from the third authentication information, the third device determines that an identity of the first device is invalid (or the authentication for the first device fails) and rejects the second message. Herein, rejecting the second message may refer to rejecting a response to the second message or sending to the first device a rejection response to the second message. In case of rejecting the response to the second message, the third device may directly end the process.

In some embodiments, after obtaining the second message, the third device may obtain data (i.e., service data reported by the first device) by decrypting the ciphertext data. The method further includes the following. The third device calculates a fifth key based on the fourth key, and the third device obtains the data by decrypting the ciphertext data based on the fifth key.

Herein, the third device calculating the fifth key based on the fourth key may mean that the third device calculates the fifth key based on the fourth key and an eighth parameter by using a fifth calculation manner. The eighth parameter may include at least one of: an identifier of an encryption algorithm, a length of the identifier of the encryption algorithm, a fourth specified value, an identifier of an output key which is also referred to an identifier of the fifth key, a length of the identifier of the fifth key, the nonce, or a length of the nonce.

The detailed illustration of the fifth calculation manner is the same as that in the above embodiments, which will not be repeated.

The contents of the eighth parameter correspond to the contents of the sixth parameter in the above embodiments. The illustration of each of the identifier of the encryption algorithm, the length of the identifier of the encryption algorithm, the fourth specified value, the nonce, and the length of the nonce in the eighth parameter is the same as that in the above embodiments, which will not be repeated.

The eighth parameter differs from the sixth parameter in the above embodiments in that the eighth parameter includes the identifier of the fifth key and the length of the identifier of the fifth key, while the sixth parameter includes the identifier of the second key and the length of the identifier of the second key.

In this embodiment, the fifth key and the second key in the above embodiments have the same function and type, and both are encryption keys or confidentiality keys; and the fifth key and the second key may theoretically be the same or may be used as a pair of keys for each other. Specifically, in this embodiment, the fifth key may be a confidentiality key or an encryption key corresponding to the third device. For example, the second key may be represented by *K_{CK-AIoT},* and accordingly, the fifth key may also be represented by *K_{CK-AIoT},* or the fifth key may be distinguishably represented by *K'_{CK-AIoT}.* That is, the third device may derive an encryption key based on the fourth key, where the encryption key is used for encrypting data sent by the third device and/or decrypting data received by the third device. Specific algorithms for the encryption and/or decryption are not limited in this embodiment, and as long as the same encryption and/or decryption algorithm is used by the first device and the third device, it falls within the protection scope of this embodiment.

As described in the above embodiments, the identifier of the second key may be an identifier of a type of the second key. For example, when the type of the second key is an encryption key, the identifier of the second key is an identifier of a type of the encryption key. Since the fifth key is of the same type as the second key, the identifier of the fifth key and the identifier of the second key may also theoretically be the same, and each may be the identifier of the type of the encryption key, such as 0x00.

Further, for specific processing manners, types of parameters used, and the like, the calculation of the fifth key by the third device may also be the same as the calculation of the second key by the first device, which therefore will not be repeated herein.

The third device obtaining the data by decrypting the ciphertext data based on the fifth key may mean that the third device obtains the data after decrypting the ciphertext data by using the fifth key, where the data may be service data. Herein, a specific manner used for decryption may correspond to the encryption manner used by the first device described above. For example, if the first device uses one or more encryption algorithms or encryption calculation functions as an encryption manner, the third device may use a decryption manner corresponding to the above encryption manner for decryption. An encryption algorithm or encryption manner and a decryption manner corresponding to the encryption manner will not be exhaustively listed and limited in this embodiment.

In some embodiments, the second message further carries verification information, and the method further includes the following. The third device calculates a sixth key based on the fourth key. The third device calculates integrity verification information based on the sixth key and the ciphertext data. The third device verifies integrity of the second message based on the integrity verification information and the verification information.

A manner of generating the verification information by the first device has been described in detail in the above embodiments, which will not be repeated herein.

The third device calculating the sixth key based on the fourth key may mean that the third device calculates the sixth key based on the fourth key and a ninth parameter by using a sixth calculation manner. The ninth parameter may include at least one of: an identifier of an integrity protection algorithm, a length of the identifier of the integrity protection algorithm, a fifth specified value, an identifier of an output key which is also referred to as an identifier of the sixth key, a length of the identifier of the sixth key, the nonce, or a length of the nonce.

The sixth calculation manner is the same as that in the above embodiments, which will not be repeated.

The contents of the ninth parameter correspond to the contents of the seventh parameter in the above embodiments. The illustration of each of the identifier of the integrity protection algorithm, the length of the identifier of the integrity protection algorithm, the fifth specified value, the nonce, and the length of the nonce in the ninth parameter is the same as that in the above embodiments, which will not be repeated.

The ninth parameter differs from the seventh parameter in the above embodiments in that the ninth parameter includes the identifier of the sixth key and the length of the identifier of the sixth key, while the seventh parameter includes the identifier of the third key and the length of the identifier of the third key.

In this embodiment, the sixth key and the third key in the above embodiments have the same function and type, and both are integrity protection keys or integrity keys; and the sixth key and the third key in the above embodiments may theoretically be the same or may be used as a pair of keys for each other. Specifically, in this embodiment, the sixth key may be an integrity key or an integrity protection key corresponding to the third device. For example, the third key may be represented by *K_{IK-AIoT},* and accordingly, the sixth key may also be represented by *K_{IK- AIoT},* or may be distinguishably represented by *K'_{IK-AIoT}.* That is, the third device may derive an integrity key based on the fourth key, where the third key is used for integrity protection of a message sent by the third device and/or integrity verification of a message received by the third device. Specific algorithms for the integrity protection and/or integrity verification are not limited in this embodiment.

As described in the above embodiments, the identifier of the third key may be an identifier of a type of the third key. For example, when the type of the third key is an integrity key, the identifier of the third key is an identifier of a type of the integrity key. Since the sixth key is of the same type as the third key, the identifier of the sixth key and the identifier of the third key may also theoretically be the same, and each may be the identifier of the type of the integrity key, such as 0x01.

Further, for specific processing manners, types of parameters used, and the like, the calculation of the sixth key by the third device may also be the same as the calculation of the third key by the first device, which therefore will not be repeated herein.

The third device calculating the integrity verification information based on the sixth key and the ciphertext data may mean that the third device obtains the integrity verification information by calculating the ciphertext data based on the sixth key. Herein, a specific calculation manner for obtaining the integrity verification information may correspond to or be the same as the integrity algorithm or integrity calculation function used by the first device described above, which is not limited in this embodiment. The integrity verification information may refer to a verification code for verifying integrity of a message. In some examples, the integrity verification information may include an integrity verification code, which may be, for example, represented by *MAC4, MIC2,* or *MIC'.*

The third device may verify integrity of the second message based on the integrity verification information and the verification information as follows. When the integrity verification information is the same as the verification information, the third device determines that the verification for integrity of the second message is passed; and/or, when the integrity verification information is different from the verification information, the third device determines that the verification for integrity of the second message fails.

Further, the processing by the third device may further include the following. If it is determined that the verification for integrity of the second message is passed, the third device may obtain the data by decrypting the ciphertext data based on the fifth key; and/or, if it is determined that the verification for integrity of the second message fails, the third device may reject the second message. The third device rejecting the second message may mean that: the third device rejects a response to the second message and ends the process; or the third device sends a rejection response to the first device and ends the process.

It may be noted that, the calculation of the fifth key and the calculation of the sixth key by the third device may be in no particular order. For example, the third device may first calculate the fifth key and the sixth key, and an order of the calculation of the fifth key and the sixth key is not limited; and then calculate the integrity verification information based on the sixth key and the ciphertext data and verify integrity of the second message based on the integrity verification information and the verification information, and if it is determined that the verification for integrity of the second message is passed, the third device may obtain the data by decrypting the ciphertext data based on the fifth key. For another example, the third device may first calculate the sixth key; and calculate the integrity verification information based on the sixth key and the ciphertext data and verify integrity of the second message based on the integrity verification information and the verification information, and if it is determined that the verification for integrity of the second message is passed, the third device may calculate the fifth key and obtain the data by decrypting the ciphertext data based on the fifth key.

In some embodiments, the second message further carries third authentication information, and the processing by the third device may further include the following. The third device sends a ninth message to the first core-network device, where the ninth message carries the third authentication information. The third device receives a tenth message sent by the first core-network device, where the tenth message indicates an authentication result of the first device.

Accordingly, the processing by the first core-network device may further include the following. The first core-network device receives the ninth message from the third device, where the ninth message carries the third authentication information. The first core-network device sends the tenth message to the third device, where the tenth message indicates the authentication result of the first device.

The method further includes the following. The first core-network device calculates second intermediate information based on the first shared key and the nonce, and calculates fourth authentication information based on the second intermediate information and a fifth parameter, where the fifth parameter includes at least one of: the first shared key, the nonce, the length of the nonce, a length of the second intermediate information, or a third specified value. The first core-network device obtains the authentication result of the first device based on the fourth authentication information and the third authentication information.

The first core-network device may calculate the second intermediate information based on the first shared key and the nonce as follows. The first core-network device calculates the second intermediate information based on the first shared key and the nonce by using a seventh calculation manner.

The illustration of the seventh calculation manner is the same as that in the above embodiments. The second intermediate information may be a second expected response (XRES). Exemplarily, the second intermediate information may be directly represented by *XRES,* or may be represented by a second intermediate XRES, or may be represented by the second XRES, or may be represented by *XRES1.* A specific manner of calculating the second intermediate information by the first core-network device may be the same as a specific manner of calculating the first intermediate information by the first device, which therefore will not be repeated.

Calculating the fourth authentication information based on the second intermediate information and the fifth parameter may mean that the first core-network device calculates the fourth authentication information based on the second intermediate information and the fifth parameter by using an eighth calculation manner. The fourth authentication information may be an XRES. Exemplarily, the fourth authentication information may be represented by *XRES*,* or may be represented by *XRES2,* etc. As long as the fourth authentication information is distinguishably represented in a different manner from the second intermediate information, it falls within the protection scope of this embodiment. The eighth calculation manner is the same as that in the above embodiments, which will not be repeated. Herein, the fifth parameter corresponds to the third parameter in the above embodiments, and the illustration of each of the first shared key, the nonce, the length of the nonce, and the third specified value in the fifth parameter is the same as that in the above embodiments, which will not be repeated. The difference from the above embodiments lies in that the fifth parameter may include the length of the second intermediate information. The second intermediate information corresponds to the first intermediate information. The calculation of the fourth authentication information by the first core-network device may be the same as a specific processing manner of calculating the third authentication information by the first device in the above embodiments, which will not be repeated herein.

The first core-network device may obtain the authentication result of the first device based on the fourth authentication information and the third authentication information as follows. When the fourth authentication information is the same as the third authentication information, the first core-network device obtains an authentication result of the first device as authentication success; and/or, when the fourth authentication information is different from the third authentication information, the first core-network device obtains an authentication result of the first device as authentication failure.

In some embodiments, the third device may send the ninth message to the first core-network device before the third device calculates the fifth key based on the fourth key and before the third device calculates the sixth key based on the fourth key.

Accordingly, after the third device receives the tenth message sent by the first core-network device, the method may further include the following. When the tenth message indicates that the authentication result of the first device is authentication success, the third device may calculate the fifth key based on the fourth key and/or the third device may calculate the sixth key based on the fourth key. The calculation of the fifth key by the third device and/or the calculation of the sixth key by the third device and the subsequent processing thereof have been described in detail in the above embodiments and will not be repeated herein.

Additionally, after the third device receives the tenth message sent by the first core-network device, the method may further include the following. When the tenth message indicates that the authentication result of the first device is authentication failure, the third device rejects the second message. Herein, rejecting the second message may mean that: the second device sends to the first device a rejection response to the second message, where the rejection response may carry a rejection cause indicating that the authentication for the first device fails, and then end the process; or, the second device rejects a response to the second message and ends the process.

In some embodiments, in the case where the first core-network device obtains the authentication result of the first device as authentication success, the first core-network device sends the tenth message to the third device, to indicate that the authentication for the first device succeeds, and the third device is to perform the above processing, which will not be repeated.

In the case where the first core-network device obtains the authentication result of the first device as authentication failure, the first core-network device may send the tenth message to the third device to indicate that the authentication for the first device fails, so as to cause the third device to reject the second message; or the first core-network device may directly send a rejection response to the third device.

The above embodiments have described the specific processing by the third device and the first core-network device and the processing performed in the case where the second device is specifically an access-network device or a terminal device during access to the 5G architecture by the first device.

In some possible embodiments, the first device accesses the WLAN.

In terms of the processing by the first device, the method may further include the following. The first device sends a third message to the second device, where the third message is used for requesting authentication, and the third message carries an identifier of the first device. Accordingly, in terms of the processing by the second device, the method may further include the following. The second device receives the third message sent by the first device, where the third message is used for requesting authentication, and the third message carries an identifier of the first device.

In this embodiment, the second device may be a gateway in the WLAN. The second device may have a binding relationship or an association relationship with the third device, and the third device may specifically be an AF in this embodiment. The second device having the binding relationship or the association relationship with the AF may mean that the second device and the AF have established a secure channel.

An execution occasion for sending the third message by the first device to the second device may be before the first device receives the first message.

In an embodiment, the first device sending the third message to the second device may mean that the first device actively sends the third message to the second device. A cause for actively sending the third message by the first device to the second device is the same as that in the above embodiments, which will not be repeated.

In an embodiment, the first device may send the third message to the second device as follows. The first device receives a wake-up signal, and the first device sends the third message to the second device. The illustration of a function and a name of the wake-up signal is the same as that in the above embodiments, which will not be repeated. The second device may send the wake-up signal in the case where the second device needs to obtain service data of the first device, or the second device may send the wake-up signal in the case where the second device receives from the AF an indication indicating to obtain service data of the first device.

In some embodiments, after the second device receives the third message sent by the first device, the method may further include the following. The second device calculates a fourth key and the first authentication information based on the first shared key and the nonce, where the first shared key is shared by the first device and the second device.

In this embodiment, the nonce is generated by the second device. A manner of generating the nonce by the second device is not limited in this embodiment. Alternatively, the nonce may be sent by another device to the second device, for example, the nonce may be generated and sent to the second device by the AF. A manner of obtaining the nonce by the second device will not be exhaustively listed and limited in this embodiment.

In some embodiments, the second device calculates the fourth key and the first authentication information based on the first shared key and the nonce as follows. The second device calculates the fourth key based on the first shared key, the nonce, and a fourth parameter. The second device calculates the first authentication information based on the fourth key.

In this embodiment, the first shared key is shared by the first device and the second device. The second device may determine a first shared key corresponding to the first device based on the identifier of the first device carried in the third message. That is, first shared keys corresponding to identifiers of different devices can be pre-stored in the second device, and the first shared key corresponding to the first device can be determined simply based on the identifier of the first device carried in a received message.

The fourth parameter includes at least one of: the identifier of the first device, a length of the identifier of the first device, the second sequence number, a length of the second sequence number, a length of the nonce, or a second specified value.

Herein, types and contents of parameters included in the fourth parameter correspond to types and contents of parameters included in the first parameter, respectively. The remaining parameters in the fourth parameter other than the second sequence number have the same contents and meanings as their counterparts in the first parameter. The second sequence number can be calculated based on a second shared key. The detailed illustration of calculating the second sequence number by the second device and the second shared key is the same as that in the above embodiments, which will not be repeated. In addition, a specific calculation manner of the second sequence number is the same as the calculation of the first sequence number by the first device described above, which will not be repeated. Furthermore, a relationship between the second sequence number and the first sequence number has been described in detail in the above embodiments and will not be repeated.

The calculation of the fourth key by the second device based on the first shared key, the nonce, and the fourth parameter may be the same as the calculation of the first key by the first device based on the first shared key, the nonce, and the first parameter. In other words, the second device uses the same parameter type and calculation manner as those used by the first device, to calculate the fourth key, where the fourth key may theoretically be the same as the first key. The fourth key calculated by the second device and the first key may be used as a pair of keys for each other, and the fourth key also serves as a security key. The security key may also be referred to as a communication security key, an authentication and data security key, or the like.

The first authentication information may be a first MAC. The representation manner and the related illustration of the first authentication information are the same as those in the above embodiments, which will not be repeated.

In some examples, the second device calculates the first authentication information based on the fourth key by using a second calculation manner. In this example, the second calculation manner is the same as that in the above embodiments, which will not be repeated. A specific processing manner used by the second device may be the same as a manner of calculating the second authentication information by the first device based on the first key by using the second calculation manner.

In some examples, the second device calculates the first authentication information based on the fourth key as follows. The second device calculates the first authentication information based on the fourth key and a second parameter. The second parameter includes at least one of: the nonce, a length of the nonce, or a first specified value.

The illustration of the second parameter is the same as that in the above embodiments, which will not be repeated. The second device may calculate the first authentication information as follows. The second device calculates the first authentication information based on the fourth key and the second parameter by using the second calculation manner. A specific processing manner of calculating the first authentication information by the second device based on the fourth key and the second parameter by using the second calculation manner and specific contents of the second parameter used by the second device may be the same as the calculation of the second authentication information by the first device based on the first key and the second parameter, which will not be repeated.

In some embodiments, the second device calculates the fourth key and the first authentication information based on the first shared key and the nonce as follows. The second device calculates the fourth key based on the first shared key, the nonce, and a fourth parameter, and calculates the first authentication information based on the first shared key, the nonce, and the second sequence number. The detailed illustration of calculating the fourth key by the second device based on the first shared key, the nonce, and the fourth parameter is the same as that in the above embodiments, which will not be repeated.

The specific calculation of the first authentication information by the second device based on the first shared key, the nonce, and the second sequence number may be the same as the specific calculation of the second authentication information by the first device based on the first shared key, the nonce, and first sequence number in the above embodiments. The difference merely lies in that the first device calculates the second authentication information based on the first sequence number, while the second device calculates the first authentication information based on the second sequence number. The calculation manners of the first sequence number and the second sequence number and the relationship between the first sequence number and the second sequence number have also been described in detail in the above embodiments, which will not be repeated herein.

In some embodiments, after obtaining the fourth key, the first authentication information, and the nonce, the second device locally stores the fourth key, and then the second device may directly send the first message. Specifically, the second device sends the first message as follows. The second device sends the first message to the first device. Accordingly, the first device receives the first message as follows. The first device receives the first message from the second device.

After the first device calculates the first key, calculates the second authentication information, and finally calculates the ciphertext data, the first device sends the second message as follows. The first device sends the second message to the second device. Accordingly, the second device receives the second message as follows. The second device receives the second message from the first device. The second message further carries third authentication information, and the third authentication information is used for authenticating the first device. Processing such as calculating the first key, calculating the second authentication information, and finally calculating the ciphertext data by the first device will not be repeated. The contents that may be carried in the second message and the detailed illustration thereof have also been described in detail in the above embodiments and will not be repeated.

In some embodiments, after obtaining the second message, the second device may obtain data (i.e., service data reported by the first device) by decrypting the ciphertext data and complete the authentication at the same time. The second message further carries third authentication information, and in terms of the processing by the second device, the method further includes the following. The second device calculates data and fourth authentication information based on the fourth key, the ciphertext data, and the third authentication information, and stores the data when the fourth authentication information is the same as the third authentication information.

Specifically, the second device may calculate the data and the fourth authentication information based on the fourth key, the ciphertext data, and the third authentication information as follows. The second device calculates the data and the fourth authentication information based on the fourth key, the ciphertext data, and the third authentication information by using a manner corresponding to a fourth calculation manner.

The fourth calculation manner may be an ASCON algorithm or an ASCON-AEAD algorithm. Specifically, the fourth calculation manner in this embodiment may be an encryption part of the ASCON-AEAD algorithm, and accordingly, the manner corresponding to the fourth calculation manner may be a decryption part of the ASCON-AEAD algorithm. That is, the second device calculating the data and the fourth authentication information based on the fourth key, the ciphertext data, and the third authentication information by using the manner corresponding to the fourth calculation manner may mean that: the second device calculates the data and the fourth authentication information based on the fourth key, the ciphertext data, and the third authentication information by using the decryption part of the ASCON-AEAD algorithm.

Storing the data when the fourth authentication information is the same as the third authentication information may mean that: when the fourth authentication information is the same as the third authentication information, the second device determines that an identity of the first device is valid, receives the second message, and stores the data. Determining that the identity of the first device is valid may refer to determining that the authentication for the first device succeeds, determining that the authentication for validity of the first device succeeds, or the like.

Additionally, the processing by the second device may include the following. When the fourth authentication information is different from the third authentication information, the second device determines that the identity of the first device is invalid (or the authentication for the first device fails), and rejects the second message. Herein, rejecting the second message may refer to rejecting a response to the second message or sending to the first device a rejection response to the second message. In case of rejecting the response to the second message, the second device may directly end the process.

It may be understood that, after the second device stores the data, the second device may further process the data, or the second device may send the data to an AF for further processing of the data by the AF. The specific contents of the further processing of the data (i.e., service data) performed by the second device or the AF are not limited in this embodiment. Whether the second device further processes the data locally or sends the data to the AF may be determined according to an actual situation. For example, in the case where the first device actively sends the third message, the second device may determine based on actual settings or configurations whether to further process the data by itself or send the data to the AF. For another example, in the case where the second device triggers the first device to send the third message by sending a wake-up signal, the second device may determine based on actual settings or configurations whether to further process the data by itself or send the data to the AF. For another example, if the second device sends a wake-up signal upon receiving from the AF an indication indicating to obtain service data of the first device, the second device may send the finally decrypted data (i.e., service data) to the AF.

In some possible embodiments, after obtaining the second message, the second device may obtain data (i.e., service data reported by the first device) by decrypting the ciphertext data. The method further includes the following. The second device calculates a fifth key based on the fourth key, and the second device obtains the data by decrypting the ciphertext data based on the fifth key.

Herein, the second device calculating the fifth key based on the fourth key may mean that the second device calculates the fifth key based on the fourth key and an eighth parameter by using a fifth calculation manner. The eighth parameter may include at least one of: an identifier of an encryption algorithm, a length of the identifier of the encryption algorithm, a fourth specified value, an identifier of an output key which is also referred to an identifier of the fifth key, a length of the identifier of the fifth key, the nonce, or a length of the nonce. The related illustration of each of the fifth calculation manner, the eighth parameter, and the fifth key is the same as that in the above embodiments, which will not be repeated.

The second device obtaining the data by decrypting the ciphertext data based on the fifth key may mean that the second device obtains the data after decrypting the ciphertext data by using the fifth key, where the data may be service data. Herein, a specific manner used for decryption may correspond to an encryption manner used by the first device. An encryption algorithm or encryption manner and a decryption manner corresponding to the encryption manner will not be exhaustively listed and limited in this embodiment.

Optionally, the second message may further carry verification information, and the method further includes the following. The second device calculates a sixth key based on the fourth key. The second device calculates integrity verification information based on the sixth key and the ciphertext data. The second device verifies integrity of the second message based on the integrity verification information and the verification information.

The second device calculating the sixth key based on the fourth key may mean that the second device calculates the sixth key based on the fourth key and a ninth parameter by using a sixth calculation manner. The ninth parameter may include at least one of: an identifier of an integrity protection algorithm, a length of the identifier of the integrity protection algorithm, a fifth specified value, an identifier of an output key which is also referred to as an identifier of the sixth key, a length of the identifier of the sixth key, the nonce, or a length of the nonce. The related illustration of the sixth calculation manner, the ninth parameter, and the sixth key is the same as that in the above embodiments, which therefore will not be repeated herein.

The second device calculating the integrity verification information based on the sixth key and the ciphertext data may mean that the second device obtains the integrity verification information by calculating the ciphertext data based on the sixth key. Herein, a specific calculation manner for obtaining the integrity verification information may correspond to or be the same as the integrity algorithm or integrity calculation function used by the first device described above, which is not limited in this embodiment.

The second device may verify integrity of the second message based on the integrity verification information and the verification information as follows. When the integrity verification information is the same as the verification information, the second device determines that the verification for integrity of the second message is passed; and/or, when the integrity verification information is different from the verification information, the second device determines that the verification for integrity of the second message fails.

Further, the processing by the second device may further include the following. If it is determined that the verification for integrity of the second message is passed, the second device may obtain the data by decrypting the ciphertext data based on the fifth key; and/or, if it is determined that the verification for integrity of the second message fails, the second device may reject the second message. The related illustration of rejecting the second message is the same as that in the above embodiments, which will not be repeated.

It may be noted that, the calculation of the fifth key and the calculation of the sixth key by the second device may be in no particular order. The detailed illustration thereof is also similar to the related illustration of the calculation of the fifth key and the sixth key by the third device in the above embodiments, which will not be repeated.

Optionally, the second message may further carry third authentication information, and the processing by the second device may further include the following. The second device calculates second intermediate information based on the first shared key and the nonce, and calculates fourth authentication information based on the second intermediate information and a fifth parameter, where the fifth parameter includes at least one of: the first shared key, the nonce, the length of the nonce, a length of the second intermediate information, or a third specified value. The second device obtains an authentication result of the first device based on the fourth authentication information and the third authentication information.

The processing for the second device to calculate the second intermediate information based on the first shared key and the nonce, calculate the fourth authentication information, the fifth parameter, and obtain the authentication result is similar to that in the above embodiments, which will not be repeated.

When the authentication result of the second device for the first device is authentication success, the second device may calculate the fifth key based on the fourth key and/or the second device may calculate the sixth key based on the fourth key. The calculation of the fifth key by the second device and/or the calculation of the sixth key by the second device and the subsequent processing thereof have been described in detail in the above embodiments and will not be repeated herein.

This disclosure has provided a security authentication protocol process for a zero-power terminal in combination with multiple embodiments. For example, when the first device is an AIoT device and the second device is a UE/base station, there may be the following scenarios in different embodiments involved in the above solutions: no UE is involved, the base station actively triggers wake-up of the AIoT device, and the AIoT device initiates an authentication request; the UE is involved, the UE/base station actively triggers wake-up of the AIoT device, and the AIoT device initiates an authentication request; no UE is involved and the AIoT device actively triggers an authentication request; a gateway in the WLAN actively triggers wake-up of the AIoT device; and the AIoT device in the WLAN actively triggers an authentication request. In combination with multiple examples, the following will give an exemplary illustration of the processing in various scenarios provided in the above embodiments.

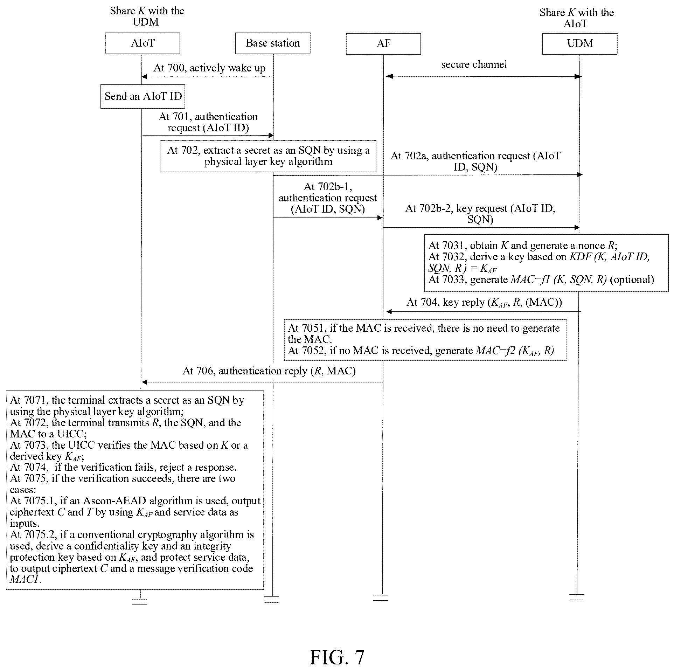

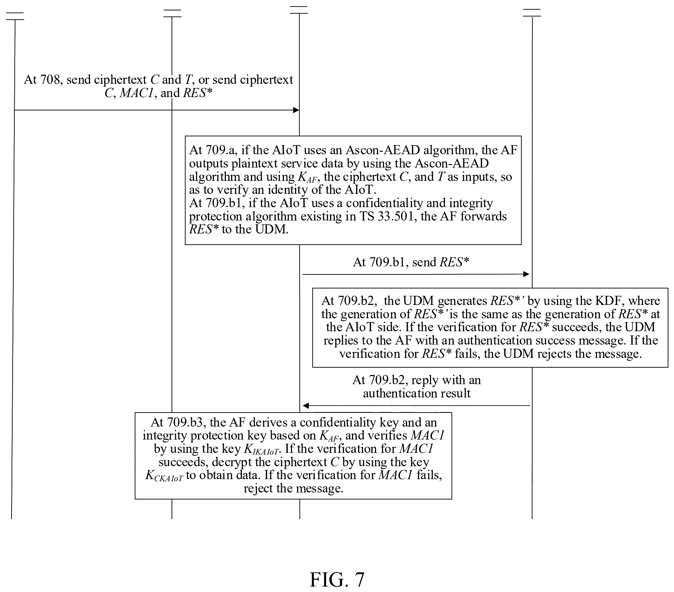

With reference to FIG. 7, for example, the first device is an AIoT device (which is schematically illustrated as an AIoT in FIG. 7 for the sake of brevity), the second device is a base station, the third device is an AF, and the first core-network device is a UDM. Herein, the zero-power terminal AIoT shares a key *K* (i.e., a first shared key) and an AIoT ID with the UDM. Assuming that a secure channel has been previously established only between the AF and the UDM, and this example is intended for a scenario where no UE is involved, the details may be as follows.

At 700, when a network side has a service requirement, the base station actively wakes up the zero-power terminal AIoT device by sending an active wake-up signal to the AIoT device.

At 701, the AIoT initiates an authentication request and sends an AIoT ID to the base station. The authentication request may be the third message in the above embodiments.

The above operations at 700 may be optional. In a scenario where no UE is involved, the base station actively triggers wake-up of the AIoT device, and the AIoT device initiates an authentication request, the above operations at 700 and 701 may be performed sequentially. In a scenario where no UE is involved and the AIoT device actively triggers the wake-up thereof, the above operations at 700 may be skipped and the operations at 701 may be directly performed, and in this case, the operations at 701 may be specifically as follows. The AIoT actively initiates the authentication request and sends the AIoT ID to the base station.

At 702, after receiving the authentication request, the base station extracts a secret as an SQN by using a physical layer key algorithm, and performs any one of the following options.

At 702a, the base station sends an authentication request message to the UDM, where the message contains the AIoT ID and the SQN. The authentication request message in this step may be the fourth message in the above embodiments.

At 702b-1, the base station sends an authentication request message to the AF, where the message contains the AIoT ID and the SQN. The authentication request message in this step may be the fifth message in the above embodiments.

At 702b-2, after the AF receives the message, the AF sends a key request to the UDM, where the message contains the AIoT ID and the SQN. Herein, the AF may also be a core-network element such as an AMF, an AUSF, an HSE, a UDR, an SEAF, or a core-network dedicated network element. The key request in this step may be the seventh message in the above embodiments.

The above operations at 702a and 702b-1 are both performed after operations at 702, and only one of the operations at 702a and 702b-1 is performed. The above operations at 702b-1 and 702b-2 are performed sequentially. In other words, if the operations at 702b-1 are performed after the operations at 702 are performed, the operations at 702b-2 need to be performed, and then operations at 703 may be performed. If the operations at 702a are performed after the operations at 702 are performed, the operations at 703 may be performed after completion of the operations at 702a.

It may be noted that, the SQN generated by the base station is the second sequence number in the above embodiments.

At 703, the UDM generates a key. Herein, the key generated by the UDM may be the above fourth key. In this embodiment, the key is represented by *K_{AF}.*

Specifically, at 7031, after receiving the authentication request or the key request, the UDM obtains the key *K* (i.e., the first shared key) based on the AIoT ID and generates a nonce R.

At 7032, the UDM generates the key *K_{AF}* by using a KDF. Input parameters include the key K, the AIoT ID, a length of the AIoT ID, the SQN (i.e., the second sequence number in the above embodiments), a length of the SQN, the nonce R, a length of the nonce R, a fixed value such as *FC=0x7E* assigned by a third party, and other parameters. Exemplarily, the above calculation may be represented by *KDF (K, AIoT ID, SQN, R) = K_{AF}.*

Optionally, at 7033, the UDM derives an MAC based on a security algorithm *f1*/*f2*/*f3*/*f4*/*f5* as specified in TS 35.206, with inputs including parameters such as the key *K,* the SQN, and the nonce R. Exemplarily, the calculation of the MAC in this step may be represented by *MAC* = *f1 (K, SQN, R).* The MAC is the first authentication information in the above embodiments.

At 704, the UDM sends a key reply to the AF, where the message contains *K_{AF}, R,* and the MAC (optional). Herein, the key reply may be the eighth message in the above embodiments.

At 705, after receiving the key reply message, the AF performs one of the following operations.

At 7051, if the message contains the MAC, the AF does not need to generate the MAC, and may directly perform operations at 706, i.e., the AF directly forwards the message to the AIoT device. Specifically, the AF may locally store the key *K_{AF}* and then perform the operations at 706.

At 7052, if the message contains no MAC, the AF generates the MAC by using the function *f2*/KDF. If the function *f2* is used, input parameters include *K_{AF}* and *R*. Exemplarily, the calculation of the MAC in this step may be represented by *MAC = j2(K_{AF}, R).* If the KDF is used, input parameters include *K_{AF},* the nonce R, the length of the nonce R, and the fixed value such as *FC=0x7E* assigned by the third party.

At 706, the AF sends to the AIoT device an authentication reply containing R and the MAC. The authentication reply in this step may be the first message in the above embodiments. The MAC is the first authentication information in the above embodiments.

At 707, after receiving the authentication reply message, the AIoT device performs the following processing.

At 7071, the AIoT device extracts a secret as an SQN by using the physical layer key algorithm. The SQN generated by the AIoT device in this step is the first sequence number in the above embodiments. In this example, for the sake of brevity, the first sequence number and the second sequence number are not distinguished from each other in terms of representation manners.

At 7072, the AIoT device transmits *R,* the SQN, and the MAC to a security function module (for example, a universal integrated circuit card (UICC)) of the AIoT device. If no security function module exists, no transmission operation is needed, i.e., operations at 7072 may be skipped.

At 7073, the AIoT device obtains a new verification code (i.e., the second authentication information in the above embodiments) based on *K* or a derived key *K_{AF},* to verify the MAC (i.e., the first authentication information in the above embodiments). The derived key obtained by the AIoT device in this step is the first key in the above embodiments. In this example, for the sake of brevity, the first key and the fourth key each are represented by *K_{AF}.*

Based on the above MAC generation manner, there is any one of the following two optional execution options.

At 7073.1, if the MAC is generated by the UDM through calculation, the AIoT device (or the security function module) derives the new verification code (i.e., the second authentication information in the above embodiments) to verify the MAC. The processes of deriving the key *K_{AF}* and generating the new verification code by the AIoT device are the same as the processes at the network side.

At 7073.2, if the MAC is generated by the AF through calculation, the AIoT device (or the security function module) derives the key *K_{AF}* based on the shared key *K,* and generates the new verification code to verify the MAC. The processes of deriving the key *K_{AF}* and generating the new verification code by the AIoT device are the same as the processes at the network side.

After operations at 7073.1 or 7073.2 are performed, operations at 7074 may be performed: if the verification for the MAC fails, a response is rejected, and the process ends. Alternatively, operations at 7075 may be performed: if the verification succeeds, there is any one of the following two optional execution options based on a cryptography algorithm used by the AIoT device.

At 7075.1, if the AIoT device uses an Ascon-AEAD algorithm, the AIoT device outputs ciphertext C (i.e., the ciphertext data in the above embodiments) and an authentication tag *T* (i.e., the third authentication information in the above embodiments) by using *K_{AF}* and service data (i.e., the data to be sent in the above embodiments) as inputs based on the Ascon-AEAD algorithm, and then performs operations at 708 to send *C* and *T* to the AF.

At 7075.2, if the AIoT device uses a confidentiality and integrity protection algorithm existing in TS 33.501, the AIoT device generates a confidentiality key *K_{CK-AIoT}* and an integrity key *K_{IK-AIoT}* by using the KDF, and protects service data (i.e., the above data to be sent), to output ciphertext C (i.e., the ciphertext data in the above embodiments) and a message verification code *MAC1* (i.e., the verification information in the above embodiments).

Specifically, in terms of generating the confidentiality key *K_{CK-AIoT}* and the integrity key *K_{IK-AIoT}* by the AIoT device by using the KDF, input parameters include *K_{AF},* an identifier of an encryption algorithm/integrity protection algorithm, a length of the identifier of the encryption algorithm/integrity protection algorithm, the fixed value such as *FC=0x7E* assigned by the third party, an identifier of an output key (for example, if the confidentiality key *K_{CK-AIOT}* is to be output, an input identifier is 0x00, or if the integrity key *K_{IK-AIoT}* is to be output, an input identifier is 0x01), a length of the identifier of the output key, the nonce *R,* the length of the nonce *R,* and other information, respectively. The AIoT generates the ciphertext C after using the key *K_{CK-AIoT}* for encryption protection of the service data, and then uses the key *K_{IK-AIoT}* for integrity protection of the ciphertext C to generate the verification code *MAC1,* and then, the AIoT device generates *RES** (i.e., the third authentication information in the above embodiments) by using the KDF. Herein, input parameters include a root key *K,* the nonce *R,* the length of the nonce *R, RES* (i.e., the first intermediate information in the above embodiments), a length of *RES,* and a fixed value such as *FC=0x6B* assigned by the third party. The AIoT device generates *RES* by using the function *f2*, where input parameters include the root key *K* and the nonce *R.* Then, the AIoT device performs the operations at 708, i.e., sending *C, MAC1,* and *RES** to the AF. In this step, the confidentiality key generated by the AIoT device is the second key in the above embodiments, and the integrity key generated by the AIoT device is the third key in the above embodiments.

At 708, the AIoT device sends the ciphertext *C* and the authentication tag *T* to the AF, or sends the ciphertext *C, MAC1,* and *RES** to the AF. In this step, the above ciphertext *C* and authentication tag *T* or the above ciphertext *C, MAC1,* and *RES** may be carried in the second message in the above embodiments.

At 709, after the AF receives a reply message, there is any one of the following two optional execution options based on a cryptography algorithm used by the AIoT device.

At 709.a, if the AIoT device uses an Ascon-AEAD algorithm, the AF outputs plaintext service data and verification information *T'* (i.e., the fourth authentication information in the above embodiments) by using the Ascon-AEAD algorithm and using *K_{AF},* the ciphertext *C,* and the authentication tag *T* as inputs, so as to verify an identity of the AIoT device.

Further, if the verification for *T* fails, the identity of the AIoT device is invalid, and the AF rejects the message. If the AF obtains a normal output, the identity of the AIoT device is valid, and the AF receives the message.

At 709.b1, if the AIoT device uses a confidentiality and integrity protection algorithm existing in TS 33.501, the AF forwards *RES** to the UDM. In this step, *RES** may be carried in the ninth message in the above embodiments.

At 709.b2, the UDM generates *RES*'* (i.e., the fourth authentication information in the above embodiments) by using the KDF. The generation of *RES**' is the same as the generation of *RES** at the AIoT side. If the verification for *RES** succeeds, the UDM replies to the AF with an authentication success message. If the verification for *RES** fails, the UDM rejects the message. Herein, the authentication success message may be the tenth message in the above embodiments.

At 709.b3, after the AF receives the authentication success message, the AF uses the KDF to generate a confidentiality key *K_{CK-AIoT}* and an integrity key *K_{IK-AIoT}* based on *K_{AF}.* The derivation process is the same as the process at the AIoT side. Then, the AF verifies *MAC1* by using the key *K_{IK-AIoT}.* If the verification for *MAC1* succeeds, the AF decrypts the ciphertext C by using the key *K_{CK-AIoT}* to obtain data. If the verification for *MAC1* fails, the AF rejects the message. In this step, the confidentiality key generated by the AF is the fifth key in the above embodiments, and the integrity key generated by the AF is the sixth key in the above embodiments.

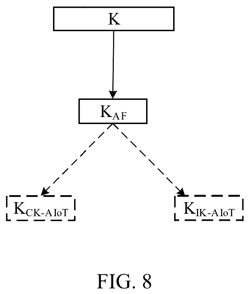

A key hierarchy involved in the process illustrated in FIG. 7 is illustrated in FIG. 8, and the specific contents related to hierarchical keys are as follows. *K* is a root key shared by the AIoT and the UDM, has a key length of at least 128 bits, and is used for generating a next-layer key *K_{AF}. K_{AF}* is a security key between the AIoT and the AF, has a key length of at least 128 bits, and is used for realizing mutual authentication between the AIoT and the AF, ensuring confidentiality and integrity protection of signalling/service data, and realizing secure transmission of signalling/service data. The key is generated based on a KDF, and input parameters include parameters such as the key *K,* an AIoT ID, a length of the AIoT ID, an SQN, a length of the SQN, a nonce *R,* a length of the nonce *R,* and a fixed value such as *FC=0x7E* assigned by a third party.

In some possible examples, as illustrated in FIG. 8, a key architecture further includes *K_{CK-AIoT}. K_{CK-AIoT}* is a confidentiality protection key between the AIoT and the AF, has a key length of at least 128 bits, and is used for realizing confidentiality protection of signalling/service data. If the AIoT and the AF use conventional encryption algorithms, the AIoT and the AF each need to generate the key. The key is generated based on a KDF, and input parameters include KAF, an identifier of an encryption algorithm, a length of the identifier of the encryption algorithm, a fixed value such as *FC=0x7E* assigned by a third party, an identifier of an output key (for example, if the confidentiality key *K_{CK-AIoT}* is to be output, an input identifier is 0x00, or if the integrity key *K_{IK-AIoT}* is to be output, an input identifier is 0x01), a length of the identifier of the output key, a nonce *R,* a length of the nonce *R,* and other information. In some possible examples, as illustrated in FIG. 8, the key architecture further includes *K_{IK-AI oT}. K_{IK-AI oT}* is an integrity protection key between the AIoT and the AF, has a key length of at least 128 bits, and is used for realizing integrity protection of signalling/service data and authentication for the AIoT by the AF. If the AIoT and the AF use conventional encryption algorithms, the AIoT and the AF each need to generate the key. The key is generated based on a KDF, and input parameters include KAF, an identifier of an encryption algorithm, a length of the identifier of the encryption algorithm, a fixed value such as *FC=0x7E* assigned by a third party, an identifier of an output key (for example, if the confidentiality key *K_{CK-AIoT}* is to be output, an input identifier is 0x00, or if the integrity key *K_{IK-AIoT}* is to be output, an input identifier is 0x01), a length of the identifier of the output key, a nonce *R,* a length of the nonce *R,* and other information.

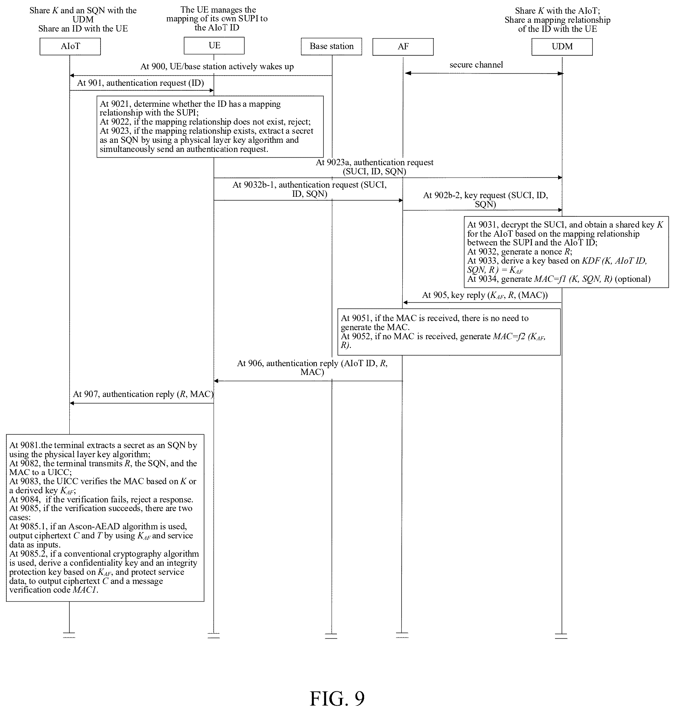

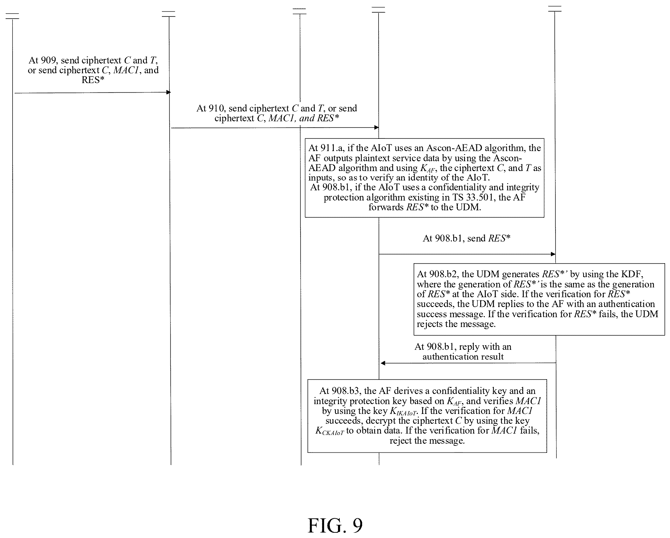

With reference to FIG. 9, for example, the first device is an AIoT device (which is schematically illustrated as an AIoT in FIG. 9 for the sake of brevity), the second device is a UE, the third device is an AF, and the first core-network device is a UDM. Herein, the zero-power terminal AIoT shares a key *K* (i.e., a first shared key) with the UDM, the AIoT device does not have an SUPI, and the AIoT device shares an AIoT ID with the UE. The UE manages the mapping of its own SUPI to the AIoT ID, the UDM shares this mapping relationship with the UE, and a secure channel has been established between the AF and the UDM. This example is intended for a scenario where the UE is involved, the UE/base station actively triggers wake-up of the AIoT device, and the AIoT device initiates an authentication request, and the details may be as follows.

At 900, when the UE or a network side has a service requirement (for example, the UE or the network side may receive a service requirement for obtaining data of the AIoT), the UE/base station actively wakes up the zero-power terminal AIoT by sending an active wake-up signal to the AIoT. In this example, the base station may correspond to the UE or serve the UE.

At 901, the AIoT initiates an authentication request and sends an AIoT ID to the UE. The authentication request may be the third message in the above embodiments.

At 9021, after receiving the authentication request, the UE determines whether the AToT ID has a mapping relationship with the SUPI.

At 9022, if the mapping relationship does not exist, the request is rejected.

At 9023, if the mapping relationship exists, the UE extracts a secret as an SQN by using a physical layer key algorithm and sends an authentication request. Specifically, the following operations at 9023a or 9023b1 may be performed.

At 9023a, the UE sends an authentication request message to the UDM, where the message contains an SUCI, an ID, and the SQN. The authentication request message in this step may be the fourth message in the above embodiments. Optionally, the ID may be the AIoT ID.

At 9023b-1, the UE sends an authentication request message to the AF (for example, through an application layer protocol), where the message contains an SUCI, an ID, and the SQN. The authentication request message in this step may be the fifth message in the above embodiments.

At 9023b-2, after the AF receives the message, the AF sends a key request message to the UDM (via an NEF), where the message contains the SUCI, the ID, and the SQN. The AF may also be a core-network element such as an AMF, an AUSF, an HSE, a UDR, an SEAF, or a core-network dedicated network element.

It may be noted that, the SQN generated by the UE is the second sequence number in the above embodiments.

At 9031, after receiving the authentication or key request, the UDM obtains the SUPI by decrypting the SUCI, and obtains a shared key *K* for the AIoT based on the mapping relationship between the SUPI and the AIoT ID.

At 9032, the UDM generates a nonce *R.*

At 9033, the UDM generates a key *K_{AF}* by using a KDF. Input parameters include the key *K,* the AIoT ID, a length of the AIoT ID, the SQN, a length of the SQN, the nonce *R,* a length of the nonce *R,* a fixed value such as *FC=0x7E* assigned by a third party, and other parameters. Exemplarily, the above calculation may be represented by *KDF (K, AIoT ID, SQN, R)* = *K_{AF}.*

Optionally, at 9034, the UDM derives an MAC based on a security algorithm *f1*/*f2*/*f3*/*f4*/*f5* as specified in TS 35.206, with inputs including parameters such as the key *K,* the SQN, and the nonce *R.* Exemplarily, the calculation of the MAC in this step may be represented by *MAC = f1 (K, SQN, R).* The MAC is the first authentication information in the above embodiments.

At 904, the UDM sends a key reply message to the AF, where the message contains *K_{AF}, R,* and the MAC (optional). The key reply message may be the eighth message in the above embodiments.

At 905, after receiving the key reply message, the AF performs one of the following operations.

At 9051, if the message contains the MAC, the AF does not need to generate the MAC, and may directly perform operations at 906, i.e., the AF directly sends the message to the UE. Specifically, the AF may locally store the key *K_{AF}* and then perform the operations at 906.

At 9052, if the message contains no MAC, the AF generates the MAC by using the function *f2*/KDF. If the function *f2* is used, input parameters include *K_{AF}* and *R*. Exemplarily, the calculation of the MAC in this step may be represented by *MAC = f2(K_{AF}, R).* If the KDF is used, input parameters include *K_{AF},* the nonce *R,* the length of the nonce R, and the fixed value such as *FC=0x7E* assigned by the third party.

At 906, the AF sends to the UE an authentication reply containing the AIoT ID, *R,* and the MAC. The authentication reply in this step may be the sixth message in the above embodiments. The MAC is the first authentication information in the above embodiments.

At 907, the UE initiates an authentication reply based on the AIoT ID and sends *(R,MAC)* to the AIoT. The authentication reply in this step may be the first message in the above embodiments.

At 908, after receiving the authentication reply message, the AIoT device performs the following processing.

At 9081, the AIoT extracts a secret as an SQN by using the physical layer key algorithm.

At 9082, the AIoT device transmits *R,* the SQN, and the MAC to a security function module (for example, a UICC) of the AIoT device. If no security function module exists, no transmission operation is needed, i.e., this step may be skipped.

Based on the above MAC generation manner, there are the following two optional execution options.

At 9083.1, if the MAC is generated by the UDM through calculation, the AIoT device (or the security function module) derives a new verification code (i.e., the second authentication information in the above embodiments) to verify the MAC. The processes of deriving the key *K_{AF}* and generating the new verification code by the AIoT device are the same as the processes at the network side.

At 9083.2, if the MAC is generated by the AF through calculation, the AIoT device (or the security function module) derives the key *K_{AF}* based on the shared key *K,* and generates a new verification code to verify the MAC. The processes of deriving the key *K_{AF}* and generating the new verification code by the AIoT device are the same as the processes at the network side.

After operations at 9083.1 or 9083.2 are performed, operations at 9084 may be performed: if the verification for the MAC fails, a response is rejected, and the process ends. Alternatively, operations at 9085 may be performed: if the verification succeeds, there is any one of the following two optional execution options based on a cryptography algorithm used by the AIoT device.

At 9085.1, if the AIoT device uses an Ascon-AEAD algorithm, the AIoT device outputs ciphertext C (i.e., the ciphertext data in the above embodiments) and an authentication tag *T* (i.e., the third authentication information in the above embodiments) by using *K_{AF}* and service data (i.e., the data to be sent in the above embodiments) as inputs based on the Ascon-AEAD algorithm, and then performs operations at 909 to send *C* and *T* to the UE.

At 9085.2, if the AIoT device uses a confidentiality and integrity protection algorithm existing in TS 33.501, the AIoT device generates a confidentiality key *K_{CK-AIoT}* and an integrity key *K_{IK-AIoT}* by using the KDF, and protects service data (i.e., the above data to be sent), to output ciphertext C (i.e., the ciphertext data in the above embodiments) and a message verification code *MAC1* (i.e., the verification information in the above embodiments). Then, the AIoT device performs operations at 909, i.e., sending *C, MAC1,* and *RES** to the UE.

Specifically, in terms of generating the confidentiality key *K_{CK-AIoT}* and the integrity key *K_{IK-AIoT}* by the AIoT device by using the KDF, input parameters include *K_{AF},* an identifier of an encryption algorithm/integrity protection algorithm, a length of the identifier of the encryption algorithm/integrity protection algorithm, the fixed value such as *FC=0x7E* assigned by the third party, an identifier of an output key (for example, if the confidentiality key *K_{CK-AIoT}* is to be output, an input identifier is 0x00, or if the integrity key *K_{IK-AIoT}* is to be output, an input identifier is 0x01), a length of the identifier of the output key, the nonce *R,* the length of the nonce *R,* and other information, respectively. The AIoT generates the ciphertext C after using the key *K_{CK-AIoT}* for encryption protection of the service data, and then uses the key *K_{IK-AIOT}* for integrity protection of the ciphertext *C* to generate the verification code *MAC1,* and then, the AIoT device generates *RES** (i.e., the third authentication information in the above embodiments) by using the KDF. Herein, input parameters include a root key *K,* the nonce *R,* the length of the nonce *R, RES* (i.e., the first intermediate information in the above embodiments), a length of *RES,* and a fixed value such as *FC=0x6B* assigned by the third party. The AIoT device generates *RES* by using the function *f2*, where input parameters include the root key *K* and the nonce *R.* In this step, the confidentiality key generated by the AIoT device is the second key in the above embodiments, and the integrity key generated by the AIoT device is the third key in the above embodiments.

At 909, the AIoT device sends the ciphertext C and the authentication tag *T* to the UE, or sends the ciphertext *C, MAC1,* and *RES** to the UE. In this step, the above ciphertext *C* and authentication tag *T* or the above ciphertext *C, MAC1,* and *RES** may be carried in the second message in the above embodiments.

At 910, the UE forwards the message to the AF. This step refers to sending the second message from the first device by the second device to the third device in the above embodiments.

At 911, after the AF receives a reply message, there is one of the following two optional execution options based on a cryptography algorithm used by the AIoT device.

At 911.a, if the AIoT uses an Ascon-AEAD algorithm, the AF outputs plaintext service data and verification information *T'* by using the Ascon-AEAD algorithm and using *K_{AF},* the ciphertext C, and the authentication tag *T* as inputs, so as to verify an identity of the AIoT device.

Further, if the verification for *T* fails, the identity of the AIoT device is invalid, and the AF rejects the message. If the AF obtains a normal output, the identity of the AIoT device is valid, and the AF receives the message.

At 911.b1, if the AIoT uses a confidentiality and integrity protection algorithm existing in TS 33.501, the AF forwards *RES** to the UDM. In this step, *RES** may be carried in the ninth message in the above embodiments.

At 911.b2, the UDM generates *RES*'* (i.e., the fourth authentication information in the above embodiments) by using the KDF. The generation of *RES*'* is the same as the generation of *RES** at the AIoT side. If the verification for *RES** succeeds, the UDM replies to the AF with an authentication success message. If the verification for *RES** fails, the UDM rejects the message. Herein, the authentication success message may be the tenth message in the above embodiments.

At 911.b3, after the AF receives the authentication success message, the AF uses the KDF to generate a confidentiality key *K_{CK-AIoT}* and an integrity key *K_{IK-AIoT}.* The generation process is the same as the process at the AIoT side. Then, the AF verifies *MAC1* by using the key *K_{IK-AIoT}.* If the verification for *MAC1* succeeds, the AF decrypts the ciphertext *C* by using the key *K_{CK-AIoT}* to obtain data. If the verification for *MAC1* fails, the AF rejects the message.

A key hierarchy involved in the process illustrated in FIG. 9 is illustrated in FIG. 8. The illustration of this key structure is the same as the above illustration, which will not be repeated.

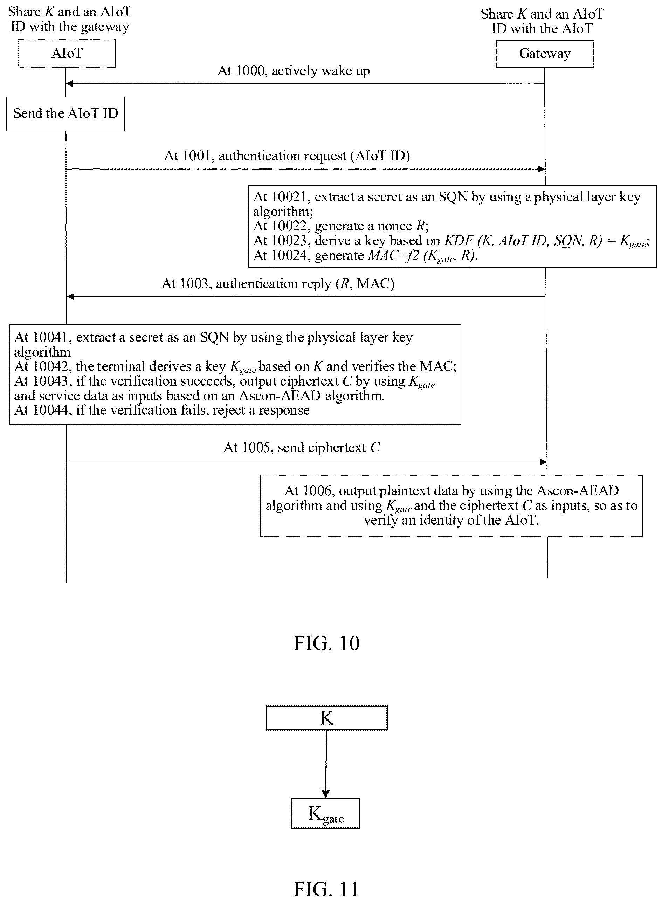

With reference to FIG. 10, for example, the first device is an AIoT device (which is schematically illustrated as an AIoT in FIG. 10 for the sake of brevity), and the second device is a gateway in a WLAN (i.e., a local area network (LAN) gateway in the WLAN). Herein, the zero-power terminal AIoT shares a key *K* (i.e., a first shared key) and an AIoT ID with the gateway. Assuming that a secure channel has been previously established only between the AF and the LAN gateway, and this example is intended for a scenario where the gateway in the WLAN actively wakes up the AIoT device, the details may be as follows.

At 1000, when the gateway has a service requirement from the AF, the gateway actively wakes up the AIoT device. In this step, waking up the AIoT device may also refer to sending a wake-up signal to the AIoT device.

At 1001, the AIoT device sends an authentication request message to the gateway, where the message contains an AIoT ID. The authentication request may be the third message in the above embodiments.

At 10021, after receiving the authentication request message, the gateway obtains *K* (i.e., the first shared key) based on the AIoT ID, and extracts a secret as an SQN by using a physical layer key algorithm. At 10022, the gateway generates a nonce *R.* At 10023, the gateway derives a key *K_{gate}* based on a KDF, with input parameters including the key *K,* the AIoT ID, a length of the AIoT ID, the SQN (i.e., the second sequence number in the above embodiments), a length of the SQN, the nonce *R,* a length of the nonce *R,* a fixed value such as *FC=0x7E* assigned by a third party, and other parameters. Exemplarily, the above calculation may be represented by *KDF (K, AIoT ID, SQN, R) = K_{gate}.* In this embodiment, *K_{gate}* derived by the gateway is the fourth key in the above embodiments. At 10024, the gateway generates an MAC (i.e., the first authentication information in the above embodiments) based on a function*f2*/KDF. If the function *f2* is used, input parameters include *K_{gate}* and *R.* Exemplarily, the calculation of the MAC in this step may be represented by *MAC* = *f2* (*K_{gate}*, *R).* If the KDF is used, input parameters include *K_{gate},* the nonce *R*, a length of the nonce *R,* and a fixed value such as *FC=0x7E* assigned by the third party.

At 1003, the gateway sends an authentication reply message to the AIoT device, where the message contains the nonce R and the MAC. The authentication reply in this step may be the first message in the above embodiments. The MAC is the first authentication information in the above embodiments.

At 10041, after receiving the message, the AIoT device extracts a secret as an SQN by using the physical layer key algorithm. The SQN generated by the AIoT device in this step is the first sequence number in the above embodiments. In this example, for the sake of brevity, the first sequence number and the second sequence number are not distinguished from each other in terms of representation manners. At 10042, the AIoT device derives a key *Kgate* based on the shared key *K* and generates a new verification code (i.e., the second authentication information in the above embodiments), so as to verify the MAC. The processes of deriving the key *Kgate* and generating the new verification code by the AIoT device are the same as the processes at the gateway. A derived key obtained by the AIoT device in this step is the first key in the above embodiments, and the first key and the fourth key each are represented by *Kgate* for the sake of brevity in this example. At 10043, if the verification succeeds, the terminal outputs ciphertext *C* (i.e., the ciphertext data in the above embodiments) and an authentication tag *T* (i.e., the third authentication information in the above embodiments) by using *Kgate* and service data (i.e., the data to be sent in the above embodiments) as inputs based on an Ascon-AEAD algorithm, and then performs operations at 1005 to send *C* and *T* to the gateway. At 10044, if the verification fails, a response is rejected, and the process ends.

At 1005, the AIoT device sends the ciphertext C and the authentication tag *T* to the gateway. In this step, the above ciphertext *C* and authentication tag *T* may be carried in the second message in the above embodiments.

At 1006, after receiving the ciphertext C and the authentication tag *T,* the gateway outputs plaintext service data and verification information *T*' by using the Ascon-AEAD algorithm and using *K_{gate},* the ciphertext *C,* and the authentication tag *T* as inputs, so as to verify an identity of the AIoT device. If the verification for *T* fails, the identity of the AIoT device is invalid, and the gateway rejects the message. If the gateway obtains a normal output, the identity of the AIoT device is valid, and the gateway receives the message.

A key hierarchy involved in the process illustrated in FIG. 10 is illustrated in FIG. 11, and the specific contents related to hierarchical keys are as follows. *K* is a root key shared by the UE and the gateway, has a key length of at least 128 bits, and is used for generating a next-layer key *K_{gate}. K_{gate}* is a security key between the UE and the gateway, has a key length of at least 128 bits, and is used for realizing mutual authentication between the terminal and the gateway, ensuring confidentiality and integrity protection of service data, and realizing secure transmission of service data. Input parameters include parameters such as the key *K,* an AIoT ID, a length of the AIoT ID, an SQN, a length of the SQN, a nonce *R,* a length of the nonce R, and a fixed value such as *FC=0x7E* assigned by a third party.

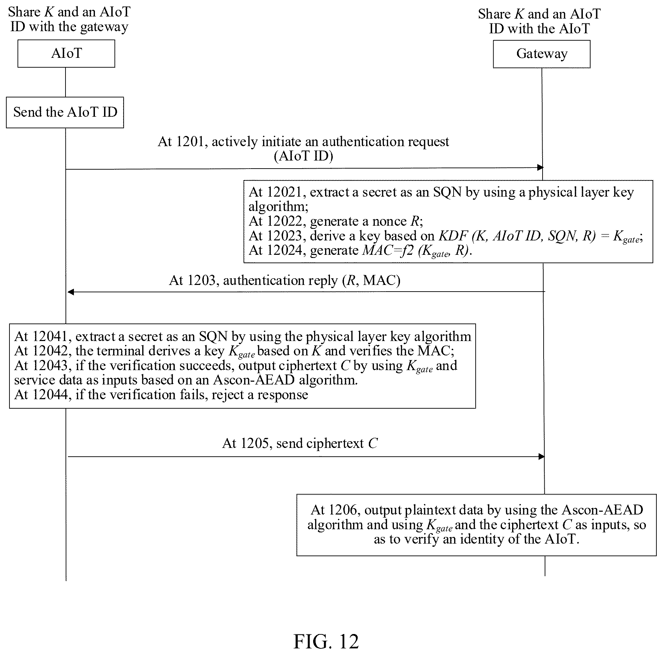

With reference to FIG. 12, for example, the first device is an AIoT device (which is schematically illustrated as an AIoT in FIG. 12 for the sake of brevity), and the second device is a gateway in a WLAN (i.e., an LAN gateway in the WLAN). Herein, the zero-power terminal AIoT shares a key *K* (i.e., a first shared key) and an AIoT ID with the gateway. Assuming that a secure channel has been previously established only between the AF and the LAN gateway, and this example is intended for a scenario where the AIoT device in the WLAN actively triggers an authentication request, the details may be as follows.

At 1201, the AIoT device sends an authentication request message to the gateway, where the message contains an AIoT ID. The authentication request may be the third message in the above embodiments.

At 12021, after receiving the authentication request message, the gateway obtains *K* (i.e., the first shared key) based on the AIoT ID, and extracts a secret as an SQN by using a physical layer key algorithm.

At 12022, the gateway generates a nonce *R.*

At 12023, the gateway derives a key *K_{gate}* based on a KDF.

At 12024, the gateway generates an MAC (i.e., the first authentication information in the above embodiments) based on a function*f2*/KDF.

At 1203, the gateway sends an authentication reply message to the AIoT device, where the message contains the nonce *R* and the MAC.

At 12041, after receiving the message, the AIoT device extracts a secret as an SQN by using the physical layer key algorithm. At 12042, the AIoT device derives a key *Kgate* based on the shared key K and generates a new verification code (i.e., the second authentication information in the above embodiments), so as to verify the MAC. At 12043, if the verification succeeds, the terminal outputs ciphertext C (i.e., the ciphertext data in the above embodiments) and an authentication tag *T* (i.e., the third authentication information in the above embodiments) by using *Kgate* and service data (i.e., the data to be sent in the above embodiments) as inputs based on an Ascon-AEAD algorithm, and then performs operations at 1205. At 12044, if the verification fails, a response is rejected, and the process ends.

At 1205, the AIoT device sends the ciphertext C and the authentication tag *T* to the gateway.

At 1206, after receiving the ciphertext C and the authentication tag *T,* the gateway outputs plaintext service data and verification information *T*' by using the Ascon-AEAD algorithm and using *K_{gate},* the ciphertext C, and the authentication tag *T* as inputs, so as to verify an identity of the AIoT device.

The detailed illustration of operations at 1202 (i.e., operations at 12021, operations at 12022 to 12024) to 1206 is the same as the illustration of operations at 1002 to 1106 in the above embodiments, which will not be repeated.

A key hierarchy involved in the process illustrated in FIG. 12 is also illustrated in FIG. 11 which will not be repeated herein.

As can be seen, by using the solution provided in the embodiments of the disclosure, a first device needs to receive only a nonce to derive a first key for encryption and second authentication information for authentication based on a local first shared key, so that when the second authentication information is the same as first authentication information, authentication can be completed and data encryption can be directly performed based on the first key. As such, authentication can be realized and a key can be obtained through only one signalling (message) exchange, thereby reducing transmission overhead and storage overhead; and a key for encryption can be obtained through only one key derivation, thereby simplifying a key derivation architecture and reducing calculation time for key derivation. Further, according to the solution provided in the embodiments of the disclosure, the transmission overhead, storage overhead, and calculation time for key derivation can be reduced, the processing efficiency of authentication and key derivation can also be improved while the authentication and key derivation are ensured, and thus requirements for low energy consumption and low delay can be satisfied, which is particularly suitable for zero-power devices.

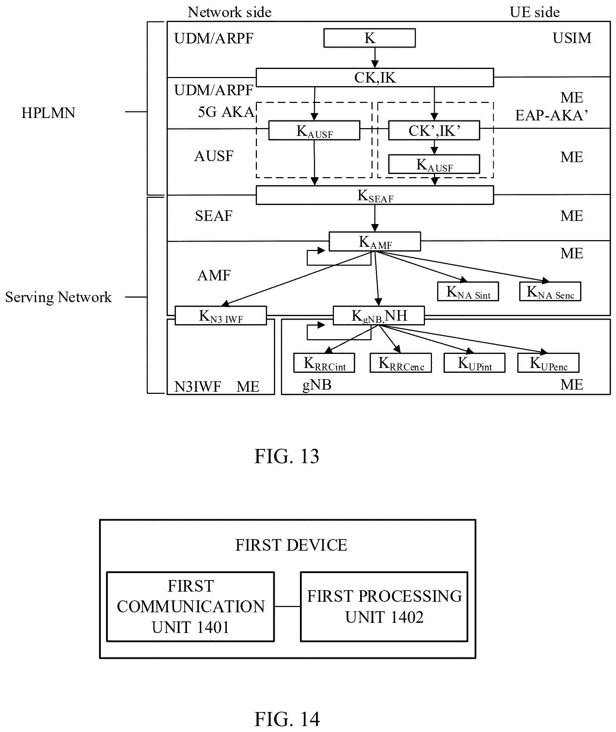

Finally, the beneficial effects of the solution provided in the embodiments will be described in combination with the related art. Currently, in the 3rd generation partnership project (3GPP) standard, there are multiple security authentication protocols suitable for different terminals, including 5G authentication key agreement (5GAKA) and extensible authentication protocol-authentication key agreement' (EAP-AKA') suitable for conventional UEs. For example, a key derivation architecture(s) in this solution is illustrated in FIG. 13. In FIG. 13, there are a network side (for example, respectively including a UDM/ARPF and an AUSF belonging to a home public land mobile network (HPLMN) as well as an SEAF, an AMF, and gNB belonging to a serving network as illustrated in FIG. 13) and a UE side (for example, a universal subscriber identity module (USIM) and a mobile equipment (ME) of a UE). In FIG. 13, keys related to authentication include a root key *K, CK* (confidentiality key)/*IK* (integrity key). In case of EAP-AKA', keys *CK'* and *IK*' are derived from *CK* and *IK,* respectively. A key *K_{AUSF}* for the AUSF in a home network is derived by the ME and the AUSF from *CK'* and *IK'* in case of EAP-AKA', or is derived by the ME and the ARPF from *CK* and *IK* in case of 5G AKA. K_{SEAF} is derived by the ME and the AUSF from *K_{AUSF}.* A key *K_{AMF}* for the AMF in the serving network is derived by the ME and the SEAF from *K_{SEAF}.* A key *K_{NASint}* for NAS signalling is derived by the ME and the AMF from *K_{AMF},* which is only used for protection of the NAS signalling with a particular integrity algorithm. *K_{NASenc}* is a key derived by the ME and the AMF from *K_{AMF}.* A key *K_{gNB}* for a next generation radio access network (NG-RAN) is derived by the ME and the AMF from *K_{AMF}.* A user plane (UP) key *K_{UPenc}* is derived by the ME and gNB from *K_{gNB},* and a UP key *K_{UPint}* is derived by the ME and gNB from *K_{gNB}.* A key *K_{RRCint}* for RRC signalling is derived by the ME and gNB from *K_{gNB},* and a key *K_{RRCenc}* for RRC signalling is derived by the ME and gNB from *K_{gNB}.* An intermediate key *NH* is derived by the ME and the AMF. A key *K_{N3IWF}* for non-3GPP access is derived by the ME and AMF from *K_{AMF}.* In the above solution, an authentication vector (AV) set is used for realizing mutual authentication, with the same authentication process. In solutions such as 5GAKA, EAP-AKA', and evolved packet system authentication key agreement (EPSAKA) suitable for the conventional UEs, the UE needs to derive multiple types of keys, including NAS control plane (CP) keys, AS CP keys, UP keys, and intermediate keys. In addition, there are key derivation architectures in other solutions such as CP for CIoT (CP CIoT) security solutions suitable for small data transmission by C-IoT devices in the related art, which will not be described in detail herein. As can be seen from the above related illustration, in authentication solutions in the related art, the terminal and the network side require the same security calculation overhead for authentication, both of which need to perform a large number of calculations. Since a zero-power terminal generally has the characteristics of battery-free or extremely small battery capacity, ultra-low power consumption, ultra-low cost, and extremely small size, such a terminal need to harvest energy from the environment to ensure that the terminal perform calculations and operates normally. However, key derivation architectures in current standard authentication protocols are relatively complex. In addition, the terminal has an extremely-limited calculation capability, a long operation time for execution of the protocols, and large power consumption, so that the terminal may have poor availability or even be unavailable. For example, a terminal may still not complete a communication task before energy depletion of the terminal. Therefore, the solutions provided above in the related art are not suitable for zero-power terminal devices with extremely-limited resources.

According to the solution provided in the embodiments of the disclosure, a problem of access authentication and secure communication among a zero-power terminal, a core network, and an application server in a 5G network can be solved. Under the premise that the terminal and the network side share a symmetric key(s), the terminal outputs as a sequence number the same result as the network side based on a physical layer key agreement algorithm, thereby ensuring that the terminal further realizes anti-replay attacks on the basis of reducing transmission overhead and storage overhead. By establishing a lightweight key architecture, calculation time for key derivation by the terminal and the network side can be simplified. In addition, by using a lightweight cryptography algorithm, the key confirmation and the authentication for the terminal by the application server can be realized through one signalling, and the confidentiality and integrity of received service data can also be ensured. By virtue of a lightweight algorithm Ascon, the advantage of low cost can be realized, thereby reducing the pressure of limited hardware and software resources on the zero-power terminal. Furthermore, by optimizing security calculation overhead, the number of transmissions, and other security costs at the terminal side, requirements of the zero-power terminal for ultra-low energy consumption and low delay can be satisfied, and the occupancy for energy consumption required for communication can also be avoided, thereby ensuring the normal operation of the terminal under conditions of limited energy supply, and finally improving the experience of a terminal user.

FIG. 14 is a schematic structural diagram of composition of a first device according to an embodiment of the disclosure. The first device includes a first communication unit 1401 and a first processing unit 1402. The first communication unit 1401 is configured to receive a first message, where the first message carries a nonce and first authentication information; and send a second message, where the second message carries ciphertext data. The first processing unit 1402 is configured to calculate a first key and second authentication information based on a first shared key and the nonce; and calculate the ciphertext data based on the first key and data to be sent, when the first authentication information is the same as the second authentication information.

The first processing unit is configured to calculate the first key based on the first shared key, the nonce, and a first parameter; and calculate the second authentication information based on the first key.

The first processing unit is configured to calculate the second authentication information based on the first key and a second parameter. The second parameter includes at least one of: the nonce, a length of the nonce, or a first specified value.

The first processing unit is configured to calculate the first key based on the first shared key, the nonce, and a first parameter, and calculate the second authentication information based on the first shared key, the nonce, and a first sequence number.

The first parameter includes at least one of: an identifier of the first device, a length of the identifier of the first device, a first sequence number, a length of the first sequence number, a length of the nonce, or a second specified value.

The first processing unit is configured to calculate the first sequence number based on a second shared key. The second shared key is shared by the first device and a second device.

The second message further carries third authentication information, the third authentication information is used for authenticating the first device; and the first processing unit is configured to calculate the ciphertext data and the third authentication information based on the first key and the data to be sent.

The first processing unit is configured to calculate a second key based on the first key; and calculate the ciphertext data based on the second key and the data to be sent.

The second message further carries at least one of: third authentication information, where the third authentication information is used for authenticating the first device; or verification information, where the verification information is used for verifying integrity of the second message.

The first processing unit is configured to perform at least one of: calculating a third key based on the first key, and calculating the verification information based on the third key and the ciphertext data; or calculating first intermediate information based on the first shared key and the nonce, and calculating the third authentication information based on the first intermediate information and a third parameter. The third parameter includes at least one of: the first shared key, the nonce, a length of the nonce, a length of the first intermediate information, or a third specified value.

The first communication unit is configured to receive the first message from a second device; and send the second message to the second device.

The second device includes one of: a terminal device and an access-network device.

The first communication unit is configured to receive the first message from a third device; and send the second message to the third device.

The third device includes one of: an AF, an AMF, an AUSF, an HSE, a UDR, an SEAF, and a core-network dedicated network element.

The first shared key is shared by the first device and a first core-network device.

The first shared key is shared by the first device and the second device.

The second device includes a gateway.

The first communication unit is configured to send a third message to a second device. The third message is used for requesting authentication, and the third message carries an identifier of the first device.

The first device is a zero-power device.

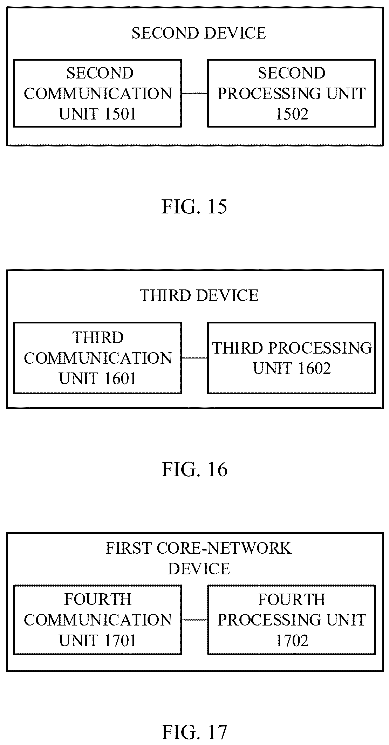

FIG. 15 is a schematic structural diagram of composition of a second device according to an embodiment of the disclosure. The second device includes a second communication unit 1501. The second communication unit 1501 is configured to send a first message. The first message carries a nonce and first authentication information, the nonce is used by a first device to calculate a first key and second authentication information based on a first shared key, and the first key is used for calculating ciphertext data for data to be sent when the second authentication information is the same as the first authentication information.

The second device further includes a second processing unit 1502. The second processing unit 1502 is configured to calculate a second sequence number based on a second shared key. The second shared key is shared by the second device and the first device.

The second communication unit is configured to receive a third message sent by the first device. The third message is used for requesting authentication, and the third message carries an identifier of the first device.

The second communication unit is configured to perform one of: sending a fourth message to a first core-network device, where the fourth message is used for requesting authentication, and the fourth message carries the identifier of the first device and the second sequence number; and sending a fifth message to a third device, where the fifth message is used for requesting authentication, and the fifth message carries the identifier of the first device and the second sequence number.

The first shared key is shared by the first core-network device and the first device.

The fourth message further carries information related to the second device and/or the fifth message further carries the information related to the second device.

The second communication unit is configured to receive a sixth message sent by the third device. The sixth message carries the identifier of the first device, the nonce, and the first authentication information.

The second communication unit is configured to send the first message to the first device; and send to the third device a second message from the first device. The second message carries the ciphertext data.

The second message further carries at least one of: third authentication information, where the third authentication information is used for authenticating the first device; or verification information, where the verification information is used for verifying integrity of the second message.

The second device includes one of: a terminal device and an access-network device. The third device includes one of: an AF, an AMF, an AUSF, an HSE, a UDR, an SEAF, and a core-network dedicated network element.

The second processing unit is configured to calculate a fourth key and the first authentication information based on the first shared key and the nonce. The first shared key is shared by the first device and the second device.

The second processing unit is configured to calculate the fourth key based on the first shared key, the nonce, and a fourth parameter; and calculate the first authentication information based on the fourth key.

The second processing unit is configured to calculate the first authentication information based on the fourth key and a second parameter. The second parameter includes at least one of: the nonce, a length of the nonce, or a first specified value.

The second processing unit is configured to calculate the fourth key based on the first shared key, the nonce, and a fourth parameter, and calculate the first authentication information based on the first shared key, the nonce, and the second sequence number.

The fourth parameter includes at least one of: the identifier of the first device, a length of the identifier of the first device, the second sequence number, a length of the second sequence number, a length of the nonce, or a second specified value.

The second communication unit is configured to send the first message to the first device; and receive a second message from the first device. The second message carries the ciphertext data.

The second message further carries third authentication information. The second processing unit is configured to calculate data and fourth authentication information based on the fourth key, the ciphertext data, and the third authentication information; and store the data, when the fourth authentication information is the same as the third authentication information.

The second device includes a gateway.

The first device is a zero-power device.

FIG. 16 is a schematic structural diagram of composition of a third device according to an embodiment of the disclosure. The third device includes a third communication unit 1601. The third communication unit 1601 is configured to send a first message, where the first message carries a nonce and first authentication information, and the nonce is used by a first device to calculate a first key and second authentication information based on a first shared key; and receive a second message, where the second message carries ciphertext data, and the ciphertext data is calculated for data to be sent based on the first key when the second authentication information is the same as the first authentication information.

The third communication unit is configured to receive a fifth message from a second device, where the fifth message is used for requesting authentication, and the fifth message carries an identifier of the first device and a second sequence number. The third communication unit is further configured to send a seventh message to a first core-network device, where the seventh message is used for requesting to obtain a key, and the seventh message carries the identifier of the first device and the second sequence number.

The third communication unit is configured to receive an eighth message from a first core-network device. The eighth message carries a fourth key and the nonce.

The eighth message further carries the first authentication information.

The third device includes a third processing unit 1602. The third processing unit is configured to calculate the first authentication information based on the fourth key.

The third processing unit is configured to calculate the first authentication information based on the fourth key and a second parameter. The second parameter includes at least one of: the nonce, a length of the nonce, or a first specified value.

The second message further carries third authentication information. The third processing unit is configured to calculate data and fourth authentication information based on the fourth key, the ciphertext data, and the third authentication information; and store the data, when the fourth authentication information is the same as the third authentication information.

The third processing unit is configured to calculate a fifth key based on the fourth key; and obtain data by decrypting the ciphertext data based on the fifth key.

The second message further carries verification information. The third processing unit is configured to calculate a sixth key based on the fourth key; calculate integrity verification information based on the sixth key and the ciphertext data; and verify integrity of the second message based on the integrity verification information and the verification information.

The second message further carries third authentication information. The third communication unit is configured to send a ninth message to the first core-network device, where the ninth message carries the third authentication information; and receive a tenth message sent by the first core-network device, where the tenth message indicates an authentication result of the first device.

The first shared key is shared by the first device and the first core-network device.

The third communication unit is configured to send the first message to the first device; and receive the second message from the first device.

The first device is a zero-power device. The second device includes one of: a terminal device and an access-network device. The third device includes one of: an AF, an AMF, an AUSF, an HSE, a UDR, an SEAF, and a core-network dedicated network element.

FIG. 17 is a schematic structural diagram of composition of a first core-network device according to an embodiment of the disclosure. The first core-network device includes a fourth communication unit 1701. The fourth communication unit 1701 is configured to send an eighth message to a third device. The eighth message carries a nonce and a fourth key, the nonce is used for calculating a first key and second authentication information based on a first shared key, and the fourth key is used for decrypting ciphertext data.

The fourth communication unit is configured to perform one of: receiving a fourth message from a second device, where the fourth message is used for requesting authentication, and the fourth message carries an identifier of a first device and a second sequence number; and receiving a seventh message from the third device, where the seventh message is used for requesting to obtain a key, and the seventh message carries the identifier of the first device and the second sequence number.

The first core-network device further includes a fourth processing unit 1702. The fourth processing unit 1702 is configured to calculate the fourth key based on the first shared key, the nonce, and a fourth parameter. The first shared key is shared by the first core-network device and the first device, and the fourth parameter includes at least one of: the identifier of the first device, a length of the identifier of the first device, the second sequence number, a length of the second sequence number, a length of the nonce, or a second specified value.

The eighth message further carries first authentication information. The fourth processing unit is configured to perform one of: calculating the first authentication information based on the first shared key, the nonce, and the second sequence number; and calculating the first authentication information based on the fourth key.

The fourth processing unit is configured to calculate the first authentication information based on the fourth key and a second parameter. The second parameter includes at least one of: the nonce, the length of the nonce, or a first specified value.

The fourth communication unit is configured to receive a ninth message from the third device, where the ninth message carries third authentication information; and send a tenth message to the third device, where the tenth message indicates an authentication result of the first device.

The fourth processing unit is configured to calculate second intermediate information based on the first shared key and the nonce, and calculate fourth authentication information based on the second intermediate information and a fifth parameter. The fifth parameter includes at least one of: the first shared key, the nonce, the length of the nonce, a length of the second intermediate information, or a third specified value. The fourth processing unit is further configured to obtain the authentication result of the first device based on the fourth authentication information and the third authentication information.

Devices in embodiments of the disclosure can implement corresponding functions of the devices in the above communication method embodiments. For processes, functions, implementations, and beneficial effects corresponding to modules (submodules, units, components, or the like) in the first device, the second device, the third device, or the first core-network device, reference can be made to corresponding illustrations in the above method embodiments, which will not be repeated herein. It may be noted that functions of modules (submodules, units, components, or the like) in the first device, the second device, the third device, or the first core-network device in embodiments of the disclosure may be implemented by different modules (submodules, units, components, or the like), or may be implemented by the same module (submodule, unit, component, or the like).

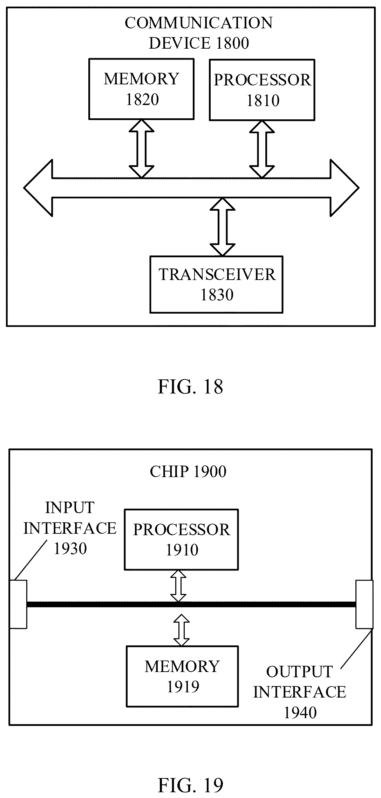

FIG. 18 is a schematic structural diagram of a communication device 1800 according to embodiments of the disclosure. The communication device 1800 includes a processor 1810. The processor 1810 may invoke and execute a computer program stored in a memory, to cause the communication device 1800 to implement the method in embodiments of the disclosure.

In a possible embodiment, the communication device 1800 may further include a memory 1820. The processor 1810 may invoke and execute a computer program stored in the memory 1820, to cause the communication device 1800 to implement the method in embodiments of the disclosure.

The memory 1820 may be a separate device independent of the processor 1810, or may be integrated into the processor 1810.

In a possible embodiment, the communication device 1800 may further include a transceiver 1830. The processor 1810 may control the transceiver 1830 to communicate with another device, and specifically, may send information or data to another device, or receive information or data from the another device. The transceiver 1830 may include a transmitter and a receiver. The transceiver 1830 may further include an antenna, where one or more antennas may be provided.

In a possible embodiment, the communication device 1800 may be the first device, the second device, the third device, or the first core-network device in embodiments of the disclosure, and the communication device 1800 may implement a corresponding process implemented by the first device, the second device, the third device, or the first core-network device in the methods according to embodiments of the disclosure, which will not be repeated herein for the sake of brevity.

A first device is provided in embodiments of the disclosure. The first device includes a processor and a memory in communication with the processor. The memory is configured to store instructions which, when executed by the processor, cause the first device to: receive a first message, where the first message carries a nonce and first authentication information; send a second message, where the second message carries ciphertext data; calculate a first key and second authentication information based on a first shared key and the nonce; and calculate the ciphertext data based on the first key and data to be sent, when the first authentication information is the same as the second authentication information.

The instructions further cause the first device to: calculate the first key based on the first shared key, the nonce, and a first parameter; and calculate the second authentication information based on the first key.

The instructions further cause the first device to: calculate the second authentication information based on the first key and a second parameter. The second parameter includes at least one of: the nonce, a length of the nonce, or a first specified value.

The instructions further cause the first device to: calculate the first key based on the first shared key, the nonce, and a first parameter, and calculate the second authentication information based on the first shared key, the nonce, and a first sequence number.

The first parameter includes at least one of: an identifier of the first device, a length of the identifier of the first device, a first sequence number, a length of the first sequence number, a length of the nonce, or a second specified value.

The instructions further cause the first device to: calculate the first sequence number based on a second shared key. The second shared key is shared by the first device and a second device.

The second message further carries third authentication information, the third authentication information is used for authenticating the first device; and the instructions further cause the first device to: calculate the ciphertext data and the third authentication information based on the first key and the data to be sent.

The instructions further cause the first device to: calculate a second key based on the first key; and calculate the ciphertext data based on the second key and the data to be sent.

The second message further carries at least one of: third authentication information, where the third authentication information is used for authenticating the first device; or verification information, where the verification information is used for verifying integrity of the second message.

The instructions further cause the first device to perform at least one of: calculating a third key based on the first key, and calculating the verification information based on the third key and the ciphertext data; or calculating first intermediate information based on the first shared key and the nonce, and calculating the third authentication information based on the first intermediate information and a third parameter. The third parameter includes at least one of: the first shared key, the nonce, a length of the nonce, a length of the first intermediate information, or a third specified value.

The instructions further cause the first device to: receive the first message from a second device; and send the second message to the second device.

The second device includes one of: a terminal device and an access-network device.

The instructions further cause the first device to: receive the first message from a third device; and send the second message to the third device.

The third device includes one of: an AF, an AMF, an AUSF, an HSE, a UDR, an SEAF, and a core-network dedicated network element.

The first shared key is shared by the first device and a first core-network device.

The first shared key is shared by the first device and the second device.

The second device includes a gateway.

The instructions further cause the first device to: send a third message to a second device. The third message is used for requesting authentication, and the third message carries an identifier of the first device.

The first device is a zero-power device.

A second device is provided in embodiments of the disclosure. The second device includes a processor and a memory in communication with the processor. The memory is configured to store instructions which, when executed by the processor, cause the second device to: send a first message. The first message carries a nonce and first authentication information, the nonce is used by a first device to calculate a first key and second authentication information based on a first shared key, and the first key is used for calculating ciphertext data for data to be sent when the second authentication information is the same as the first authentication information.

The instructions further cause the second device to: calculate a second sequence number based on a second shared key. The second shared key is shared by the second device and the first device.

The instructions further cause the second device to: receive a third message sent by the first device. The third message is used for requesting authentication, and the third message carries an identifier of the first device.

The instructions further cause the second device to perform one of: sending a fourth message to a first core-network device, where the fourth message is used for requesting authentication, and the fourth message carries the identifier of the first device and the second sequence number; and sending a fifth message to a third device, where the fifth message is used for requesting authentication, and the fifth message carries the identifier of the first device and the second sequence number.

The first shared key is shared by the first core-network device and the first device.

The fourth message further carries information related to the second device and/or the fifth message further carries the information related to the second device.

The instructions further cause the second device to: receive a sixth message sent by the third device. The sixth message carries the identifier of the first device, the nonce, and the first authentication information.

The instructions further cause the second device to: send the first message to the first device; and send to the third device a second message from the first device. The second message carries the ciphertext data.

The second message further carries at least one of: third authentication information, where the third authentication information is used for authenticating the first device; or verification information, where the verification information is used for verifying integrity of the second message.

The second device includes one of: a terminal device and an access-network device. The third device includes one of: an AF, an AMF, an AUSF, an HSE, a UDR, an SEAF, and a core-network dedicated network element.

The instructions further cause the second device to: calculate a fourth key and the first authentication information based on the first shared key and the nonce. The first shared key is shared by the first device and the second device.

The instructions further cause the second device to: calculate the fourth key based on the first shared key, the nonce, and a fourth parameter; and calculate the first authentication information based on the fourth key.

The instructions further cause the second device to: calculate the first authentication information based on the fourth key and a second parameter. The second parameter includes at least one of: the nonce, a length of the nonce, or a first specified value.

The instructions further cause the second device to: calculate the fourth key based on the first shared key, the nonce, and a fourth parameter, and calculate the first authentication information based on the first shared key, the nonce, and the second sequence number.

The fourth parameter includes at least one of: the identifier of the first device, a length of the identifier of the first device, the second sequence number, a length of the second sequence number, a length of the nonce, or a second specified value.

The instructions further cause the second device to: send the first message to the first device; and receive a second message from the first device. The second message carries the ciphertext data.

The second message further carries third authentication information. The instructions further cause the second device to: calculate data and fourth authentication information based on the fourth key, the ciphertext data, and the third authentication information; and store the data, when the fourth authentication information is the same as the third authentication information.

The second device includes a gateway. The first device is a zero-power device.

A third device is provided in embodiments of the disclosure. The third device includes a processor and a memory in communication with the processor. The memory is configured to store instructions which, when executed by the processor, cause the third device to: send a first message, where the first message carries a nonce and first authentication information, and the nonce is used by a first device to calculate a first key and second authentication information based on a first shared key; and receive a second message, where the second message carries ciphertext data, and the ciphertext data is calculated for data to be sent based on the first key when the second authentication information is the same as the first authentication information.

The instructions further cause the third device to: receive a fifth message from a second device, where the fifth message is used for requesting authentication, and the fifth message carries an identifier of the first device and a second sequence number; and send a seventh message to a first core-network device, where the seventh message is used for requesting to obtain a key, and the seventh message carries the identifier of the first device and the second sequence number.

The instructions further cause the third device to: receive an eighth message from a first core-network device. The eighth message carries a fourth key and the nonce.

The eighth message further carries the first authentication information.

The instructions further cause the third device to: calculate the first authentication information based on the fourth key.

The instructions further cause the third device to: calculate the first authentication information based on the fourth key and a second parameter. The second parameter includes at least one of: the nonce, a length of the nonce, or a first specified value.

The second message further carries third authentication information. The instructions further cause the third device to: calculate data and fourth authentication information based on the fourth key, the ciphertext data, and the third authentication information; and store the data, when the fourth authentication information is the same as the third authentication information.

The instructions further cause the third device to: calculate a fifth key based on the fourth key; and obtain data by decrypting the ciphertext data based on the fifth key.

The second message further carries verification information. The instructions further cause the third device to: calculate a sixth key based on the fourth key; calculate integrity verification information based on the sixth key and the ciphertext data; and verify integrity of the second message based on the integrity verification information and the verification information.

The second message further carries third authentication information. The instructions further cause the third device to: send a ninth message to the first core-network device, where the ninth message carries the third authentication information; and receive a tenth message sent by the first core-network device, where the tenth message indicates an authentication result of the first device.

The first shared key is shared by the first device and the first core-network device.

The instructions further cause the third device to: send the first message to the first device; and receive the second message from the first device.

The first device is a zero-power device. The second device includes one of: a terminal device and an access-network device. The third device includes one of: an AF, an AMF, an AUSF, an HSE, a UDR, an SEAF, and a core-network dedicated network element.

A first core-network device is provided in embodiments of the disclosure. The first core-network device includes a processor and a memory in communication with the processor. The memory is configured to store instructions which, when executed by the processor, cause the first core-network device to: send an eighth message to a third device. The eighth message carries a nonce and a fourth key, the nonce is used for calculating a first key and second authentication information based on a first shared key, and the fourth key is used for decrypting ciphertext data.

The instructions further cause the first core-network device to perform one of: receiving a fourth message from a second device, where the fourth message is used for requesting authentication, and the fourth message carries an identifier of a first device and a second sequence number; and receiving a seventh message from the third device, where the seventh message is used for requesting to obtain a key, and the seventh message carries the identifier of the first device and the second sequence number.

The instructions further cause the first core-network device to: calculate the fourth key based on the first shared key, the nonce, and a fourth parameter. The first shared key is shared by the first core-network device and the first device, and the fourth parameter includes at least one of: the identifier of the first device, a length of the identifier of the first device, the second sequence number, a length of the second sequence number, a length of the nonce, or a second specified value.

The eighth message further carries first authentication information. The instructions further cause the first core-network device to perform one of: calculating the first authentication information based on the first shared key, the nonce, and the second sequence number; and calculating the first authentication information based on the fourth key.

The instructions further cause the first core-network device to: calculate the first authentication information based on the fourth key and a second parameter. The second parameter includes at least one of: the nonce, the length of the nonce, or a first specified value.

The instructions further cause the first core-network device to: receive a ninth message from the third device, where the ninth message carries third authentication information; and send a tenth message to the third device, where the tenth message indicates an authentication result of the first device.

The instructions further cause the first core-network device to: calculate second intermediate information based on the first shared key and the nonce, and calculate fourth authentication information based on the second intermediate information and a fifth parameter. The fifth parameter includes at least one of: the first shared key, the nonce, the length of the nonce, a length of the second intermediate information, or a third specified value. The instructions further cause the first core-network device to: obtain the authentication result of the first device based on the fourth authentication information and the third authentication information.

FIG. 19 is a schematic structural diagram of a chip 1900 according to embodiments of the disclosure. The chip 1900 includes a processor 1910. The processor 1910 may invoke and execute a computer program stored in a memory to implement the method in embodiments of the disclosure.

In a possible embodiment, the chip 1900 may further include a memory 1920. The processor 1910 may invoke and execute a computer program stored in the memory 1920, to implement the method performed by the access-network device or the first core-network device in embodiments of the disclosure. The memory 1920 may be a separate device independent of the processor 1910, or may be integrated into the processor 1910.

In a possible embodiment, the chip 1900 may further include an input interface 1930. The processor 1910 may control the input interface 1930 to communicate with another device or chip, and specifically, may obtain information or data sent by the another device or chip. In a possible embodiment, the chip 1900 may further include an output interface 1940. The processor 1910 may control the output interface 1940 to communicate with another device or chip, and specifically, may output information or data to the another device or chip.

In a possible embodiment, the chip may be applied to the first device, the second device, the third device, or the first core-network device in embodiments of the disclosure, and the chip may implement corresponding processes implemented by the first device, the second device, the third device, or the first core-network device in the methods according to embodiments of the disclosure, which will not be repeated herein for the sake of brevity.

It may be understood that, the chip mentioned in embodiments of the disclosure may also be a system-on-chip (SoC).

The processor mentioned above may be a general-purpose processor, a digital signal processor (DSP), a field programmable gate array (FPGA), an application specific integrated circuit (ASIC), or another programmable logic device, a transistor logic device, a discrete hardware component, or the like. The general-purpose processor may be a microprocessor, or may be any conventional processor or the like.

The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It may be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. In other words, the memory in embodiments of the disclosure is intended to include, but is not limited to, these and any other suitable types of memory.

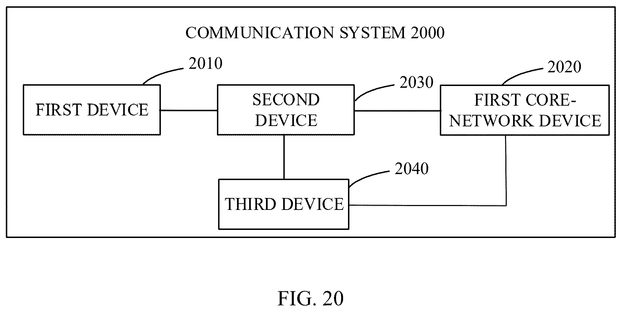

FIG. 20 is a schematic block diagram of a communication system 2000 according to embodiments of the disclosure. The communication system 2000 includes a first device 2010, a first core-network device 2020, a second device 2030, and a third device 2040. All or part of the above embodiments can be implemented through software, hardware, firmware, or any other combination thereof. When implemented by software, all or part of the above embodiments can be implemented in the form of a computer program product. The computer program product includes one or more computer instructions. When the computer program instructions are applied and executed on a computer, all or part of the operations or functions of the embodiments of the disclosure are performed. The computer can be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which is integrated with one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

It may be understood that in various embodiments of the disclosure, the magnitude of a sequence number of each of the above processes does not mean an execution order, and an execution order of each process can be determined according to a function and an internal logic of the process, which shall not constitute any limitation to an implementation process of embodiments of the disclosure.

It will be evident to those skilled in the art that, for the sake of convenience and brevity, in terms of the specific working processes of the foregoing systems, apparatuses, and units, reference can be made to the corresponding processes in the above method embodiments, which will not be repeated herein.

The foregoing elaborations are merely embodiments of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A communication method, comprising:
receiving, by a first device, a first message, wherein the first message carries a nonce and first authentication information;
calculating, by the first device, a first key and second authentication information based on a first shared key and the nonce;
calculating, by the first device, ciphertext data based on the first key and data to be sent, in response to the first authentication information being the same as the second authentication information; and
sending, by the first device, a second message, wherein the second message carries the ciphertext data.

2. The method of claim 1, wherein calculating, by the first device, the first key and the second authentication information based on the first shared key and the nonce comprises:
calculating, by the first device, the first key based on the first shared key, the nonce, and a first parameter; and
calculating, by the first device, the second authentication information based on the first key.

3. The method of claim 2, wherein calculating, by the first device, the second authentication information based on the first key comprises:
calculating, by the first device, the second authentication information based on the first key and a second parameter, wherein the second parameter comprises at least one of: the nonce, a length of the nonce, or a first specified value.

4. The method of claim 1, wherein calculating, by the first device, the first key and the second authentication information based on the first shared key and the nonce comprises:
calculating, by the first device, the first key based on the first shared key, the nonce, and a first parameter, and calculating, by the first device, the second authentication information based on the first shared key, the nonce, and a first sequence number.

5. The method of any one of claims 2 to 4, wherein the first parameter comprises at least one of: an identifier of the first device, a length of the identifier of the first device, a first sequence number, a length of the first sequence number, a length of the nonce, or a second specified value.

6. The method of claim 4 or 5, further comprising:
calculating, by the first device, the first sequence number based on a second shared key, wherein the second shared key is shared by the first device and a second device.

7. The method of any one of claims 1 to 6, wherein the second message further carries third authentication information, the third authentication information is used for authenticating the first device, and calculating, by the first device, the ciphertext data based on the first key and the data to be sent comprises:
calculating, by the first device, the ciphertext data and the third authentication information based on the first key and the data to be sent.

8. The method of any one of claims 1 to 6, wherein calculating, by the first device, the ciphertext data based on the first key and the data to be sent comprises:
calculating, by the first device, a second key based on the first key; and
calculating, by the first device, the ciphertext data based on the second key and the data to be sent.

9. The method of claim 8, wherein the second message further carries at least one of:
third authentication information, wherein the third authentication information is used for authenticating the first device; or
verification information, wherein the verification information is used for verifying integrity of the second message.

10. The method of claim 9, further comprising at least one of:
calculating, by the first device, a third key based on the first key, and calculating, by the first device, the verification information based on the third key and the ciphertext data; or
calculating, by the first device, first intermediate information based on the first shared key and the nonce, and calculating, by the first device, the third authentication information based on the first intermediate information and a third parameter, wherein the third parameter comprises at least one of: the first shared key, the nonce, a length of the nonce, a length of the first intermediate information, or a third specified value.

11. The method of any one of claims 1 to 10, wherein
receiving, by the first device, the first message comprises: receiving, by the first device, the first message from a second device; and
sending, by the first device, the second message comprises: sending, by the first device, the second message to the second device.

12. The method of claim 11, wherein the second device comprises one of: a terminal device and an access-network device.

13. The method of any one of claims 1 to 10, wherein
receiving, by the first device, the first message comprises: receiving, by the first device, the first message from a third device; and
sending, by the first device, the second message comprises: sending, by the first device, the second message to the third device.

14. The method of claim 13, wherein the third device comprises one of: an application function (AF), an access and mobility management function (AMF), an authentication server function (AUSF), a hardware security engine (HSE), a unified data repository (UDR), a security anchor function (SEAF), and a core-network dedicated network element.

15. The method of any one of claims 11 to 14, wherein the first shared key is shared by the first device and a first core-network device.

16. The method of claim 11, wherein the first shared key is shared by the first device and the second device.

17. The method of claim 11 or 16, wherein the second device comprises a gateway.

18. The method of any one of claims 11 to 17, further comprising:
sending, by the first device, a third message to a second device, wherein the third message is used for requesting authentication, and the third message carries an identifier of the first device.

19. The method of any one of claims 1 to 18, wherein the first device is a zero-power device.

20. A communication method, comprising:
sending, by a second device, a first message, wherein the first message carries a nonce and first authentication information, the nonce is used by a first device to calculate a first key and second authentication information based on a first shared key, and the first key is used for calculating ciphertext data for data to be sent in response to the second authentication information being the same as the first authentication information.

21. The method of claim 20, further comprising:
calculating, by the second device, a second sequence number based on a second shared key, wherein the second shared key is shared by the second device and the first device.

22. The method of claim 21, further comprising:
receiving, by the second device, a third message sent by the first device, wherein the third message is used for requesting authentication, and the third message carries an identifier of the first device.

23. The method of claim 22, further comprising one of:
sending, by the second device, a fourth message to a first core-network device, wherein the fourth message is used for requesting authentication, and the fourth message carries the identifier of the first device and the second sequence number; and
sending, by the second device, a fifth message to a third device, wherein the fifth message is used for requesting authentication, and the fifth message carries the identifier of the first device and the second sequence number.

24. The method of claim 23, wherein the first shared key is shared by the first core-network device and the first device.

25. The method of claim 23 or 24, wherein the fourth message further carries information related to the second device and/or the fifth message further carries the information related to the second device.

26. The method of any one of claims 23 to 25, further comprising:
receiving, by the second device, a sixth message sent by the third device, wherein the sixth message carries the identifier of the first device, the nonce, and the first authentication information.

27. The method of any one of claims 23 to 26, wherein sending, by the second device, the first message comprises: sending, by the second device, the first message to the first device; and
the method further comprises: sending, by the second device, to the third device a second message from the first device, wherein the second message carries the ciphertext data.

28. The method of claim 27, wherein the second message further carries at least one of:
third authentication information, wherein the third authentication information is used for authenticating the first device; or
verification information, wherein the verification information is used for verifying integrity of the second message.

29. The method of any one of claims 23 to 28, wherein the second device comprises one of: a terminal device and an access-network device; and the third device comprises one of: an application function (AF), an access and mobility management function (AMF), an authentication server function (AUSF), a hardware security engine (HSE), a unified data repository (UDR), a security anchor function (SEAF), and a core-network dedicated network element.

30. The method of claim 22, further comprising:
calculating, by the second device, a fourth key and the first authentication information based on the first shared key and the nonce, wherein the first shared key is shared by the first device and the second device.

31. The method of claim 30, wherein calculating, by the second device, the fourth key and the first authentication information based on the first shared key and the nonce comprises:
calculating, by the second device, the fourth key based on the first shared key, the nonce, and a fourth parameter; and
calculating, by the second device, the first authentication information based on the fourth key.

32. The method of claim 31, wherein calculating, by the second device, the first authentication information based on the fourth key comprises:
calculating, by the second device, the first authentication information based on the fourth key and a second parameter, wherein the second parameter comprises at least one of: the nonce, a length of the nonce, or a first specified value.

33. The method of claim 30, wherein calculating, by the second device, the fourth key and the first authentication information based on the first shared key and the nonce comprises:
calculating, by the second device, the fourth key based on the first shared key, the nonce, and a fourth parameter, and calculating, by the second device, the first authentication information based on the first shared key, the nonce, and the second sequence number.

34. The method of any one of claims 31 to 33, wherein the fourth parameter comprises at least one of: the identifier of the first device, a length of the identifier of the first device, the second sequence number, a length of the second sequence number, a length of the nonce, or a second specified value.

35. The method of any one of claims 30 to 34, wherein sending, by the second device, the first message comprises: sending, by the second device, the first message to the first device; and
the method further comprises: receiving, by the second device, a second message from the first device, wherein the second message carries the ciphertext data.

36. The method of claim 35, wherein the second message further carries third authentication information, and the method further comprises:
calculating, by the second device, data and fourth authentication information based on the fourth key, the ciphertext data, and the third authentication information; and
storing the data, in response to the fourth authentication information being the same as the third authentication information.

37. The method of any one of claims 30 to 36, wherein the second device comprises a gateway.

38. The method of any one of claims 20 to 37, wherein the first device is a zero-power device.

39. A communication method, comprising:
sending, by a third device, a first message, wherein the first message carries a nonce and first authentication information, and the nonce is used by a first device to calculate a first key and second authentication information based on a first shared key; and
receiving, by the third device, a second message, wherein the second message carries ciphertext data, and the ciphertext data is calculated for data to be sent based on the first key in response to the second authentication information being the same as the first authentication information.

40. The method of claim 39, further comprising:
receiving, by the third device, a fifth message from a second device, wherein the fifth message is used for requesting authentication, and the fifth message carries an identifier of the first device and a second sequence number; and
sending, by the third device, a seventh message to a first core-network device, wherein the seventh message is used for requesting to obtain a key, and the seventh message carries the identifier of the first device and the second sequence number.

41. The method of claim 39 or 40, further comprising:
receiving, by the third device, an eighth message from a first core-network device, wherein the eighth message carries a fourth key and the nonce.

42. The method of claim 41, wherein the eighth message further carries the first authentication information.

43. The method of claim 41, further comprising:
calculating, by the third device, the first authentication information based on the fourth key.

44. The method of claim 43, wherein calculating, by the third device, the first authentication information based on the fourth key comprises:
calculating, by the third device, the first authentication information based on the fourth key and a second parameter, wherein the second parameter comprises at least one of: the nonce, a length of the nonce, or a first specified value.

45. The method of any one of claims 41 to 44, wherein the second message further carries third authentication information, and the method further comprises:
calculating, by the third device, data and fourth authentication information based on the fourth key, the ciphertext data, and the third authentication information; and
storing the data, in response to the fourth authentication information being the same as the third authentication information.

46. The method of any one of claims 41 to 44, further comprising:
calculating, by the third device, a fifth key based on the fourth key; and
obtaining, by the third device, data by decrypting the ciphertext data based on the fifth key.

47. The method of claim 46, wherein the second message further carries verification information, and the method further comprises:
calculating, by the third device, a sixth key based on the fourth key;
calculating, by the third device, integrity verification information based on the sixth key and the ciphertext data; and
verifying, by the third device, integrity of the second message based on the integrity verification information and the verification information.

48. The method of claim 46 or 47, wherein the second message further carries third authentication information, and the method further comprises:
sending, by the third device, a ninth message to the first core-network device, wherein the ninth message carries the third authentication information; and
receiving, by the third device, a tenth message sent by the first core-network device, wherein the tenth message indicates an authentication result of the first device.

49. The method of any one of claims 40 to 48, wherein the first shared key is shared by the first device and the first core-network device.

50. The method of any one of claims 40 to 49, wherein
sending, by the third device, the first message comprises: sending, by the third device, the first message to the first device; and
receiving, by the third device, the second message comprises: receiving, by the third device, the second message from the first device.

51. The method of any one of claims 40 to 50, wherein the first device is a zero-power device; the second device comprises one of: a terminal device and an access-network device; and the third device comprises one of: an application function (AF), an access and mobility management function (AMF), an authentication server function (AUSF), a hardware security engine (HSE), a unified data repository (UDR), a security anchor function (SEAF), and a core-network dedicated network element.

52. A communication method, comprising:
sending, by a first core-network device, an eighth message to a third device, wherein the eighth message carries a nonce and a fourth key, the nonce is used for calculating a first key and second authentication information based on a first shared key, and the fourth key is used for decrypting ciphertext data.

53. The method of claim 52, further comprises one of:
receiving, by the first core-network device, a fourth message from a second device, wherein the fourth message is used for requesting authentication, and the fourth message carries an identifier of a first device and a second sequence number; and
receiving, by the first core-network device, a seventh message from the third device, wherein the seventh message is used for requesting to obtain a key, and the seventh message carries the identifier of the first device and the second sequence number.

54. The method of claim 53, further comprising:
calculating, by the first core-network device, the fourth key based on the first shared key, the nonce, and a fourth parameter, wherein the first shared key is shared by the first core-network device and the first device, and the fourth parameter comprises at least one of: the identifier of the first device, a length of the identifier of the first device, the second sequence number, a length of the second sequence number, a length of the nonce, or a second specified value.

55. The method of claim 54, wherein the eighth message further carries first authentication information, and the method further comprises one of:
calculating, by the first core-network device, the first authentication information based on the first shared key, the nonce, and the second sequence number; and
calculating, by the first core-network device, the first authentication information based on the fourth key.

56. The method of claim 55, wherein calculating, by the first core-network device, the first authentication information based on the fourth key comprises:
calculating, by the first core-network device, the first authentication information based on the fourth key and a second parameter, wherein the second parameter comprises at least one of: the nonce, the length of the nonce, or a first specified value.

57. The method of any one of claims 54 to 56, further comprising:
receiving, by the first core-network device, a ninth message from the third device, wherein the ninth message carries third authentication information; and
sending, by the first core-network device, a tenth message to the third device, wherein the tenth message indicates an authentication result of the first device.

58. The method of claim 57, further comprising:
calculating, by the first core-network device, second intermediate information based on the first shared key and the nonce, and calculating, by the first core-network device, fourth authentication information based on the second intermediate information and a fifth parameter, wherein the fifth parameter comprises at least one of: the first shared key, the nonce, the length of the nonce, a length of the second intermediate information, or a third specified value; and
obtaining, by the first core-network device, the authentication result of the first device based on the fourth authentication information and the third authentication information.

59. A first device, comprising:
a first communication unit configured to receive a first message, wherein the first message carries a nonce and first authentication information; and send a second message, wherein the second message carries ciphertext data;
a first processing unit configured to calculate a first key and second authentication information based on a first shared key and the nonce; and calculate the ciphertext data based on the first key and data to be sent, in response to the first authentication information being the same as the second authentication information.

60. The first device of claim 59, wherein the first processing unit is configured to calculate the first key based on the first shared key, the nonce, and a first parameter; and calculate the second authentication information based on the first key.

61. The first device of claim 60, wherein the first processing unit is configured to calculate the second authentication information based on the first key and a second parameter, wherein the second parameter comprises at least one of: the nonce, a length of the nonce, or a first specified value.

62. The first device of claim 59, wherein the first processing unit is configured to calculate the first key based on the first shared key, the nonce, and a first parameter, and calculate the second authentication information based on the first shared key, the nonce, and a first sequence number.

63. The first device of any one of claims 60 to 62, wherein the first parameter comprises at least one of: an identifier of the first device, a length of the identifier of the first device, a first sequence number, a length of the first sequence number, a length of the nonce, or a second specified value.

64. The first device of claim 62 or 63, wherein the first processing unit is configured to calculate the first sequence number based on a second shared key, wherein the second shared key is shared by the first device and a second device.

65. The first device of any one of claims 59 to 64, wherein the second message further carries third authentication information, the third authentication information is used for authenticating the first device; and the first processing unit is configured to calculate the ciphertext data and the third authentication information based on the first key and the data to be sent.

66. The first device of any one of claims 59 to 64, wherein the first processing unit is configured to calculate a second key based on the first key; and calculate the ciphertext data based on the second key and the data to be sent.

67. The first device of claim 66, wherein the second message further carries at least one of: third authentication information, wherein the third authentication information is used for authenticating the first device; or verification information, wherein the verification information is used for verifying integrity of the second message.

68. The first device of claim 67, wherein the first processing unit is configured to perform at least one of: calculating a third key based on the first key, and calculating the verification information based on the third key and the ciphertext data; or calculating first intermediate information based on the first shared key and the nonce, and calculating the third authentication information based on the first intermediate information and a third parameter, wherein the third parameter comprises at least one of: the first shared key, the nonce, a length of the nonce, a length of the first intermediate information, or a third specified value.

69. The first device of any one of claims 59 to 68, wherein the first communication unit is configured to receive the first message from a second device; and send the second message to the second device.

70. The first device of claim 69, wherein the second device comprises one of: a terminal device and an access-network device.

71. The first device of any one of claims 59 to 68, wherein the first communication unit is configured to receive the first message from a third device; and send the second message to the third device.

72. The first device of claim 71, wherein the third device comprises one of: an application function (AF), an access and mobility management function (AMF), an authentication server function (AUSF), a hardware security engine (HSE), a unified data repository (UDR), a security anchor function (SEAF), and a core-network dedicated network element.

73. The first device of any one of claims 69 to 72, wherein the first shared key is shared by the first device and a first core-network device.

74. The first device of claim 69, wherein the first shared key is shared by the first device and the second device.

75. The first device of claim 69 or 74, wherein the second device comprises a gateway.

76. The first device of any one of claims 69 to 75, wherein the first communication unit is configured to send a third message to a second device, wherein the third message is used for requesting authentication, and the third message carries an identifier of the first device.

77. The first device of any one of claims 59 to 76, wherein the first device is a zero-power device.

78. A second device, comprising:
a second communication unit configured to send a first message, wherein the first message carries a nonce and first authentication information, the nonce is used by a first device to calculate a first key and second authentication information based on a first shared key, and the first key is used for calculating ciphertext data for data to be sent in response to the second authentication information being the same as the first authentication information.

79. The second device of claim 78, further comprising:
a second processing unit configured to calculate a second sequence number based on a second shared key, wherein the second shared key is shared by the second device and the first device.

80. The second device of claim 79, wherein the second communication unit is configured to receive a third message sent by the first device, wherein the third message is used for requesting authentication, and the third message carries an identifier of the first device.

81. The second device of claim 80, wherein the second communication unit is configured to perform one of: sending a fourth message to a first core-network device, wherein the fourth message is used for requesting authentication, and the fourth message carries the identifier of the first device and the second sequence number; and sending a fifth message to a third device, wherein the fifth message is used for requesting authentication, and the fifth message carries the identifier of the first device and the second sequence number.

82. The second device of claim 81, wherein the first shared key is shared by the first core-network device and the first device.

83. The second device of claim 81 or 82, wherein the fourth message further carries information related to the second device and/or the fifth message further carries the information related to the second device.

84. The second device of any one of claims 81 to 83, wherein the second communication unit is configured to receive a sixth message sent by the third device, wherein the sixth message carries the identifier of the first device, the nonce, and the first authentication information.

85. The second device of any one of claims 81 to 84, wherein the second communication unit is configured to send the first message to the first device; and send to the third device a second message from the first device, wherein the second message carries the ciphertext data.

86. The second device of claim 85, wherein the second message further carries at least one of: third authentication information, wherein the third authentication information is used for authenticating the first device; or verification information, wherein the verification information is used for verifying integrity of the second message.

87. The second device of any one of claims 81 to 86, wherein the second device comprises one of: a terminal device and an access-network device; and the third device comprises one of: an application function (AF), an access and mobility management function (AMF), an authentication server function (AUSF), a hardware security engine (HSE), a unified data repository (UDR), a security anchor function (SEAF), and a core-network dedicated network element.

88. The second device of claim 80, wherein the second processing unit is configured to calculate a fourth key and the first authentication information based on the first shared key and the nonce, wherein the first shared key is shared by the first device and the second device.

89. The second device of claim 88, wherein the second processing unit is configured to calculate the fourth key based on the first shared key, the nonce, and a fourth parameter; and calculate the first authentication information based on the fourth key.

90. The second device of claim 89, wherein the second processing unit is configured to calculate the first authentication information based on the fourth key and a second parameter, wherein the second parameter comprises at least one of: the nonce, a length of the nonce, or a first specified value.

91. The second device of claim 88, wherein the second processing unit is configured to calculate the fourth key based on the first shared key, the nonce, and a fourth parameter, and calculate the first authentication information based on the first shared key, the nonce, and the second sequence number.

92. The second device of any one of claims 89 to 91, wherein the fourth parameter comprises at least one of: the identifier of the first device, a length of the identifier of the first device, the second sequence number, a length of the second sequence number, a length of the nonce, or a second specified value.

93. The second device of any one of claims 88 to 92, wherein the second communication unit is configured to send the first message to the first device; and receive a second message from the first device, wherein the second message carries the ciphertext data.

94. The second device of claim 93, wherein the second message further carries third authentication information, and the second processing unit is configured to calculate data and fourth authentication information based on the fourth key, the ciphertext data, and the third authentication information; and store the data, in response to the fourth authentication information being the same as the third authentication information.

95. The second device of any one of claims 88 to 94, wherein the second device comprises a gateway.

96. The second device of any one of claims 78 to 95, wherein the first device is a zero-power device.

97. A third device, comprising:
a third communication unit configured to send a first message, wherein the first message carries a nonce and first authentication information, and the nonce is used by a first device to calculate a first key and second authentication information based on a first shared key; and receive a second message, wherein the second message carries ciphertext data, and the ciphertext data is calculated for data to be sent based on the first key in response to the second authentication information being the same as the first authentication information.

98. The third device of claim 97, wherein the third communication unit is configured to receive a fifth message from a second device, wherein the fifth message is used for requesting authentication, and the fifth message carries an identifier of the first device and a second sequence number; and send a seventh message to a first core-network device, wherein the seventh message is used for requesting to obtain a key, and the seventh message carries the identifier of the first device and the second sequence number.

99. The third device of claim 97 or 98, wherein the third communication unit is configured to receive an eighth message from a first core-network device, wherein the eighth message carries a fourth key and the nonce.

100. The third device of claim 99, wherein the eighth message further carries the first authentication information.

101. The third device of claim 99, further comprising:
a third processing unit configured to calculate the first authentication information based on the fourth key.

102. The third device of claim 101, wherein the third processing unit is configured to calculate the first authentication information based on the fourth key and a second parameter, wherein the second parameter comprises at least one of: the nonce, a length of the nonce, or a first specified value.

103. The third device of any one of claims 99 to 102, wherein the second message further carries third authentication information, and the third processing unit is configured to calculate data and fourth authentication information based on the fourth key, the ciphertext data, and the third authentication information; and store the data, in response to the fourth authentication information being the same as the third authentication information.

104. The third device of any one of claims 99 to 102, wherein the third processing unit is configured to calculate a fifth key based on the fourth key; and obtain data by decrypting the ciphertext data based on the fifth key.

105. The third device of claim 104, wherein the second message further carries verification information, and the third processing unit is configured to calculate a sixth key based on the fourth key; calculate integrity verification information based on the sixth key and the ciphertext data; and verify integrity of the second message based on the integrity verification information and the verification information.

106. The third device of claim 104 or 105, wherein the second message further carries third authentication information, and the third communication unit is configured to send a ninth message to the first core-network device, wherein the ninth message carries the third authentication information; and receive a tenth message sent by the first core-network device, wherein the tenth message indicates an authentication result of the first device.

107. The third device of any one of claims 98 to 106, wherein the first shared key is shared by the first device and the first core-network device.

108. The third device of any one of claims 98 to 107, wherein the third communication unit is configured to send the first message to the first device; and receive the second message from the first device.

109. The third device of any one of claims 98 to 108, wherein the first device is a zero-power device; the second device comprises one of: a terminal device and an access-network device; and the third device comprises one of: an application function (AF), an access and mobility management function (AMF), an authentication server function (AUSF), a hardware security engine (HSE), a unified data repository (UDR), a security anchor function (SEAF), and a core-network dedicated network element.

110. A first core-network device, comprising:
a fourth communication unit configured to send an eighth message to a third device, wherein the eighth message carries a nonce and a fourth key, the nonce is used for calculating a first key and second authentication information based on a first shared key, and the fourth key is used for decrypting ciphertext data.

111. The first core-network device of claim 110, wherein the fourth communication unit is configured to perform one of: receiving a fourth message from a second device, wherein the fourth message is used for requesting authentication, and the fourth message carries an identifier of a first device and a second sequence number; and receiving a seventh message from the third device, wherein the seventh message is used for requesting to obtain a key, and the seventh message carries the identifier of the first device and the second sequence number.

112. The first core-network device of claim 111, further comprising:
a fourth processing unit configured to calculate the fourth key based on the first shared key, the nonce, and a fourth parameter, wherein the first shared key is shared by the first core-network device and the first device, and the fourth parameter comprises at least one of: the identifier of the first device, a length of the identifier of the first device, the second sequence number, a length of the second sequence number, a length of the nonce, or a second specified value.

113. The first core-network device of claim 112, wherein the eighth message further carries first authentication information, and the fourth processing unit is configured to perform one of: calculating the first authentication information based on the first shared key, the nonce, and the second sequence number; and calculating the first authentication information based on the fourth key.

114. The first core-network device of claim 113, wherein the fourth processing unit is configured to calculate the first authentication information based on the fourth key and a second parameter, wherein the second parameter comprises at least one of: the nonce, the length of the nonce, or a first specified value.

115. The first core-network device of any one of claims 112 to 114, wherein the fourth communication unit is configured to receive a ninth message from the third device, wherein the ninth message carries third authentication information; and send a tenth message to the third device, wherein the tenth message indicates an authentication result of the first device.

116. The first core-network device of claim 115, wherein the fourth processing unit is configured to calculate second intermediate information based on the first shared key and the nonce, and calculate fourth authentication information based on the second intermediate information and a fifth parameter, wherein the fifth parameter comprises at least one of: the first shared key, the nonce, the length of the nonce, a length of the second intermediate information, or a third specified value; and obtain the authentication result of the first device based on the fourth authentication information and the third authentication information.

117. A first device, comprising a processor and a memory in communication with the processor, wherein the memory is configured to store instructions which, when executed by the processor, cause the first device to perform the method of any one of claims 1 to 19.

118. A second device, comprising a processor and a memory in communication with the processor, wherein the memory is configured to store instructions which, when executed by the processor, cause the second device to perform the method of any one of claims 20 to 38.

119. A third device, comprising a processor and a memory in communication with the processor, wherein the memory is configured to store instructions which, when executed by the processor, cause the third device to perform the method of any one of claims 39 to 51.

120. A first core-network device, comprising a processor and a memory in communication with the processor, wherein the memory is configured to store instructions which, when executed by the processor, cause the first core-network device to perform the method of any one of claims 52 to 58.

121. A computer-readable storage medium configured to store a computer program which, when executed by a device, causes the device to perform the method of any one of claims 1 to 19, the method of any one of claims 20 to 38, the method of any one of claims 39 to 51, or the method of any one of claims 52 to 58.

122. A computer program product comprising computer program instructions which cause a computer to perform the method of any one of claims 1 to 19, the method of any one of claims 20 to 38, the method of any one of claims 39 to 51, or the method of any one of claims 52 to 58.
